(19) Europäisches Patentamt
European Patent Office
Office européen des brevets

(11) **EP 3 075 155 B1**

(12) **FASCICULE DE BREVET EUROPEEN**

(45) Date de publication et mention
de la délivrance du brevet:
**06.02.2019 Bulletin 2019/06**

(21) Numéro de dépôt: **14814981.8**

(22) Date de dépôt: **27.11.2014**

(51) Int Cl.:
*H04N 19/12* *(2014.01)*   *H04N 19/88* *(2014.01)*
*H04N 19/147* *(2014.01)*

(86) Numéro de dépôt international:
**PCT/FR2014/053069**

(87) Numéro de publication internationale:
**WO 2015/079179 (04.06.2015 Gazette 2015/22)**

(54) **PROCÉDÉ DE CODAGE ET DE DÉCODAGE D'IMAGES, DISPOSITIF DE CODAGE ET DE DÉCODAGE D'IMAGES ET PROGRAMMES D'ORDINATEUR CORRESPONDANTS**

VERFAHREN ZUR CODIERUNG UND DECODIERUNG VON BILDERN, VORRICHTUNG ZUR CODIERUNG UND DECODIERUNG VON BILDERN UND ENTSPRECHENDE COMPUTERPROGRAMME

METHOD FOR ENCODING AND DECODING IMAGES, DEVICE FOR ENCODING AND DECODING IMAGES AND CORRESPONDING COMPUTER PROGRAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.11.2013 FR 1361822**

(43) Date de publication de la demande:
**05.10.2016 Bulletin 2016/40**

(73) Titulaire: **Orange**
**75015 Paris (FR)**

(72) Inventeurs:
• **PHILIPPE, Pierrick**
**F-35520 Melesse (FR)**
• **VORWERK, Hendrik**
**48153 Münster (DE)**

(56) Documents cités:
**FR-A1- 2 899 744**

• **ICHIGAYA A ET AL: "CE7.5: Performance analysis of adaptive DCT/DST selection", 6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-F229, 1 juillet 2011 (2011-07-01), XP030009252,**

**Description**

Domaine de l'invention

La présente invention se rapporte de manière générale au domaine du traitement d'images, et plus précisément au codage et au décodage d'images numériques et de séquences d'images numériques.

Le codage/décodage d'images numériques s'applique notamment à des images issues d'au moins une séquence vidéo comprenant :

- des images issues d'une même caméra et se succédant temporellement (codage/décodage de type 2D),
- des images issues de différentes caméras orientées selon des vues différentes (codage/décodage de type 3D),
- des composantes de texture et de profondeur correspondantes (codage/décodage de type 3D),
- etc...

La présente invention s'applique de manière similaire au codage/décodage d'images de type 2D ou 3D.

L'invention peut notamment, mais non exclusivement, s'appliquer au codage vidéo mis en oeuvre dans les codeurs vidéo actuels AVC et HEVC et leurs extensions (MVC, 3D-AVC, MV-HEVC, 3D-HEVC, etc), et au décodage correspondant.

Art antérieur

Les codeurs vidéo actuels (MPEG, H.264, HEVC, ...) utilisent une représentation par blocs de la séquence vidéo. Les images sont découpées en blocs, lesquels sont susceptibles d'être redécoupés de façon récursive. Puis chaque bloc est codé par prédiction intra-images ou inter-images. Ainsi, certaines images sont codées par prédiction spatiale (prédiction intra), d'autres images sont également codées par prédiction temporelle (prédiction inter) par rapport à une ou plusieurs images de référence codées-décodées, à l'aide d'une compensation en mouvement connue par l'homme de l'art.

Pour chaque bloc est codé un bloc résidu, encore appelé résidu de prédiction, correspondant au bloc original diminué d'une prédiction. Les blocs résidus sont transformés à l'aide d'une opération mathématique de transformation, puis quantifiés à l'aide d'une opération mathématique de quantification par exemple de type scalaire. Des coefficients sont obtenus à l'issue de l'étape de quantification. Ils sont ensuite parcourus dans un ordre de lecture qui dépend du mode de codage qui a été choisi. Dans la norme HEVC, par exemple, l'ordre de lecture est dépendant de la prédiction réalisée et peut être effectué dans l'ordre « horizontal », « vertical » ou « diagonal ».

A l'issue du parcours précité, une liste monodimensionnelle de coefficients est obtenue. Les coefficients de cette liste sont alors codés sous forme de bits par un codage entropique dont le but est de coder les coefficients sans perte.

En ce qui concerne l'opération de transformation mathématique précitée, les transformations de type bloc sont les plus utilisées car elles réunissent trois critères importants :

- ce sont des transformées bloc, il est ainsi facile de manipuler les blocs indépendamment les uns des autres,
- elles sont efficaces pour compacter l'information dans le domaine fréquentiel, là où l'opération de réduction de débit opère,
- elles sont implémentées à l'aide d'algorithmes rapides assurant une complexité algorithmique limitée.

Dans le domaine du codage vidéo, les transformées en cosinus discrète, DCT (abréviation anglaise de « Discrète Cosine Transform »), ou les transformées en sinus discrète, DST (abréviation anglaise de « Discrete Sine Transform »), sont privilégiées pour leur rapidité d'exécution. En particulier, elles sont implémentées de façon séparable en peu d'opérations et disposent d'implémentations bien adaptées au traitement sur processeur à virgule fixe.

Les bits obtenus après codage entropique sont inscrits dans un signal ou flux de données qui est destiné à être transmis au décodeur.

De façon connue en soi, un tel signal comprend :

- les coefficients quantifiés contenus dans la liste précitée,
- des informations représentatives du mode de codage utilisé, en particulier:

  • le mode de prédiction (prédiction intra, prédiction inter, prédiction par défaut réalisant une prédiction pour laquelle aucune information n'est transmise au décodeur (« en anglais « skip »)) ;
  • des informations précisant le type de prédiction (orientation, image de référence, ...) ;
  • le type de découpage du bloc ;

- le type de transformée, par exemple DCT 4x4, DCT 8x8, etc...
- les informations de mouvement si nécessaire ;
- etc.

Une fois que le flux a été reçu par le décodeur, le décodage est fait image par image, et pour chaque image, bloc par bloc. Pour chaque bloc, les éléments correspondants du flux sont lus. La quantification inverse et la transformation inverse des coefficients des blocs sont effectuées pour produire le résidu de prédiction décodé. Puis, la prédiction du bloc est calculée et le bloc est reconstruit en ajoutant la prédiction au résidu de prédiction décodé.

La technique de codage/décodage classique qui vient d'être décrite permet certes des améliorations des performances de codage. Selon le contexte vidéo, elle permet notamment :

- une amélioration de la qualité des images pour un débit donné du réseau utilisé pour transmettre les images,
- un réduction du débit de transmission des images pour un critère de qualité d'images préalablement fixé.

Toutefois, de telles performances de codage ne sont actuellement pas optimisées et ont vocation à encore être améliorées, en particulier du point de vue de la minimisation du coût débit/distorsion ou bien du choix du meilleur compromis efficacité/complexité, qui sont des critères bien connus de l'homme du métier. Du FR 2 899 744 un procédé de codage utilisant une transformation par blocs de pixels est connu. Dans ce procédé des permutations de pixels sont définies pour des tailles de blocs.

Objet et résumé de l'invention

Un des buts de l'invention est de remédier à des inconvénients de l'état de la technique précité.

A cet effet, un objet de la présente invention concerne un procédé de codage d'au moins une image découpée en blocs.

Le procédé de codage selon l'invention est remarquable en ce que pour un bloc courant à coder, il met en oeuvre les étapes de :

- prédiction du bloc courant à l'aide d'au moins un bloc prédicteur,
- détermination d'un bloc résidu de données représentatif de la différence entre le bloc prédicteur et le bloc courant,
- sélection, selon un critère de performance de codage prédéterminé, d'un couple d'opérations mathématiques comprenant une opération de permutation et une opération de transformation parmi respectivement une pluralité d'opérations de permutation et une pluralité d'opérations de transformation,
- application de l'opération de permutation du couple sélectionné aux données du bloc résidu déterminé,
- application de l'opération de transformation du couple sélectionné aux données permutées,
- codage des données issues de l'opération de transformation appliquée.

Une telle disposition a pour avantage d'améliorer significativement les performances de compression du signal de données à transmettre au décodeur, par un meilleur choix du compromis efficacité/complexité. En d'autres termes, les performances de codage sont meilleures que celles obtenues dans l'art antérieur moyennant à la fois une simplicité de mise oeuvre des étapes de codage et une complexité limitée au décodage.

Selon un mode de réalisation particulier, la pluralité d'opérations de transformation contient une transformée en sinus discrète.

Le choix d'une transformée DST permet avantageusement d'optimiser les performances de codage, mais également de réduire les ressources en calculs.

Selon une première variante, le choix d'une transformée DST parmi la pluralité d'opérations de transformation disponibles est imposé au codage, ce qui simplifie l'étape de sélection d'une transformée.

Selon une deuxième variante, la pluralité d'opérations de transformation contient une seule opération de transformation qui est une transformée DST. Cette deuxième variante a pour avantage que le codeur n'est pas nécessairement obligé de transmettre au décodeur l'indice associé à la transformée DST, dans le cas bien sûr où cet indice est déjà disponible au décodeur. De ce fait, le coût de signalisation des informations de codage s'en trouve réduit efficacement.

Selon un autre mode de réalisation particulier, le critère prédéterminé est la minimisation du coût débit-distorsion du bloc courant à coder.

Le choix d'un tel critère optimise la sélection du couple permutation-transformée.

Selon un autre mode de réalisation particulier, l'opération de permutation sélectionnée consiste à déplacer de proche en proche les données du bloc résidu déterminé, conformément à une opération de transposition des données dudit bloc résidu.

Ce type de permutation a pour avantage d'être particulièrement simple d'un point de vue calculatoire.

Les différents modes ou caractéristiques de réalisation précités peuvent être ajoutés indépendamment ou en combinaison les uns avec les autres, aux étapes du procédé de codage tel que défini ci-dessus.

L'invention concerne également un dispositif de codage d'au moins une image découpée en blocs.

Un tel dispositif de codage est remarquable en ce qu'il comprend, pour un bloc courant à coder :

- un module pour prédire le bloc courant à l'aide d'au moins un bloc prédicteur,
- un module pour déterminer un bloc résidu de données représentatif de la différence entre le bloc prédicteur et le bloc courant,
- un module pour sélectionner, selon un critère de performance de codage prédéterminé, un couple d'opérations mathématiques comprenant une opération de permutation et une opération de transformation parmi respectivement une pluralité d'opérations de permutation et une pluralité d'opérations de transformation,
- un module de permutation pour appliquer l'opération de permutation du couple sélectionné aux données du bloc résidu déterminé,
- un module de transformation pour appliquer l'opération de transformation du couple sélectionné aux données permutées,
- un module de codage pour coder les données délivrées par le module de transformation.

Un tel dispositif de codage est notamment apte à mettre en oeuvre le procédé de codage précité.

L'invention concerne aussi un procédé de décodage d'un signal de données représentatif d'au moins une image découpée en blocs.

Un tel procédé de décodage est remarquable en ce qu'il comprend, pour un bloc courant à décoder, les étapes de :

- détermination, dans le signal de données, de données représentatives d'un bloc résidu courant associé au bloc courant à décoder,
- détermination d'au moins un bloc prédicteur du bloc courant à décoder,
- détermination d'un couple d'opérations mathématiques comprenant une opération de transformation et une opération de permutation,
- application de l'opération de transformation du couple d'opérations déterminé aux données représentatives d'un bloc résidu courant,
- application de l'opération de permutation du couple déterminé aux données obtenues à la suite de l'application de l'opération de transformation,
- reconstruction du bloc courant à l'aide du bloc prédicteur déterminé et des données issues de l'opération de permutation appliquée.

Selon un mode de réalisation particulier, l'étape de détermination du couple d'opérations mathématiques met en oeuvre les étapes suivantes :

- lecture, dans le signal de données, d'une information représentative du couple d'opérations de permutation et de transformation sélectionné au codage du bloc courant à décoder,
- détermination des opérations de permutation et de transformation respectivement inverses des opérations de permutation et de transformation du couple associé à l'information lue.

Un tel mode de réalisation est mis en oeuvre lorsque la quantité des données signalant le couple d'opérations de permutation et de transformation transmis est amenuisée, ce qui a pour conséquence de ne pas permettre au décodeur de retrouver lui-même le couple d'opérations de permutation et de transformation qui a été sélectionné au codage.

Selon un autre mode de réalisation particulier, l'étape de détermination du couple d'opérations mathématiques consiste à :

- appliquer aux données représentatives du bloc résidu courant une pluralité de couples d'opérations mathématiques comprenant une opération de transformation suivie d'une opération de permutation, les opérations de transformation et de permutation étant choisies parmi respectivement une pluralité prédéterminée d'opérations de transformation et une pluralité prédéterminée d'opérations de permutation,
- reconstruire une pluralité de blocs respectivement à partir de la pluralité de couples appliquée,
- sélectionner un bloc reconstruit parmi la pluralité de blocs reconstruits, par maximisation d'un critère de cohérence appliqué à la pluralité de blocs reconstruits.

Un tel autre mode de réalisation est mis en oeuvre lorsque le décodeur est capable de retrouver lui-même le couple d'opérations de permutation et de transformation qui a été sélectionné au codage.

Cet autre mode de réalisation permet une réduction du coût de signalisation plus importante que celle obtenue dans le mode de réalisation précédent, car l'indice de l'opération de permutation et/ou l'indice de l'opération de transformation qui ont été sélectionnées au codage ne sont pas obligatoirement transmis dans le signal de données reçu au décodeur.

Selon un autre mode de réalisation particulier, l'opération de transformation déterminée ou sélectionnée est une transformée en sinus discrète.

Selon un autre mode de réalisation particulier, l'opération de permutation du couple d'opérations déterminé consiste à déplacer de proche en proche les données obtenues suite à l'application de l'opération de transformation du couple déterminé, conformément à une opération de transposition de ces données.

Les différents modes ou caractéristiques de réalisation précités peuvent être ajoutés indépendamment ou en combinaison les uns avec les autres, aux étapes du procédé de décodage tel que défini ci-dessus.

Corrélativement, l'invention concerne encore un dispositif de décodage d'un signal de données représentatif d'au moins une image découpée en blocs.

Un tel dispositif de décodage est remarquable en ce qu'il comprend, pour un bloc courant à décoder :

- un module pour déterminer, dans le signal de données, des données représentatives d'un bloc résidu courant associé au bloc courant à décoder,
- un module pour déterminer au moins un bloc prédicteur du bloc courant à décoder,
- un module pour déterminer un couple d'opérations mathématiques comprenant une opération de transformation et une opération de permutation,
- un module de transformation pour appliquer l'opération de transformation du couple déterminé aux données représentatives du bloc résidu courant,
- un module de permutation pour appliquer l'opération de permutation du couple déterminé aux données transformées,
- un module de prédiction pour reconstruire le bloc courant à l'aide du bloc prédicteur déterminé et des données délivrées par le module de permutation.

Un tel dispositif de décodage est notamment apte à mettre en oeuvre le procédé de décodage précité.

L'invention concerne encore un programme d'ordinateur comportant des instructions pour mettre en oeuvre l'un des procédés de codage et de décodage selon l'invention, lorsqu'il est exécuté sur un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré un programme d'ordinateur, ce programme comportant des instructions adaptées à la mise en oeuvre de l'un des procédés de codage ou de décodage selon l'invention, tels que décrits ci-dessus.

L'invention vise également un support d'enregistrement lisible par un ordinateur sur lequel est enregistré un programme d'ordinateur, ce programme comportant des instructions adaptées à la mise en oeuvre du procédé de codage ou de décodage selon l'invention, tels que décrits ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé de codage ou de décodage précité.

Le procédé de décodage, le dispositif de codage, le dispositif de décodage, les programmes d'ordinateur et les supports d'enregistrement correspondants précités présentent au moins les mêmes avantages que ceux conférés par le procédé de codage selon la présente invention.

Brève description des dessins

D'autres caractéristiques et avantages apparaîtront à la lecture d'un mode de réalisation préféré décrit en référence aux figures dans lesquelles:

- la figure 1 représente les étapes du procédé de codage selon l'invention,
- la figure 2 représente un mode de réalisation d'un dispositif de codage selon l'invention,
- la figure 3A représente un tableau contenant différents couples permutation-transformation qui sont utilisés dans le cas d'un bloc 4x4,
- les figures 3B et 3C représentent un tableau contenant différents couples permutation-transformation qui sont utilisés dans le cas d'un bloc 8x8,
- la figure 4 représente un mode de réalisation d'un dispositif de décodage selon l'invention,
- la figure 5 représente les principales étapes du procédé de décodage selon l'invention,
- la figure 6A représente un premier mode de réalisation de l'étape de détermination du couple d'opérations de permutation et de transformation mise en oeuvre dans le procédé de décodage de la figure 5,
- la figure 6B représente un deuxième mode de réalisation de l'étape de détermination du couple d'opérations de permutation et de transformation mise en oeuvre dans le procédé de décodage de la figure 5.

Description détaillée de la partie codage

Un mode de réalisation de l'invention va maintenant être décrit, dans lequel le procédé de codage selon l'invention est utilisé pour coder une image ou une séquence d'images selon un flux binaire proche de celui qu'on obtient par un codage conforme par exemple à la norme HEVC.

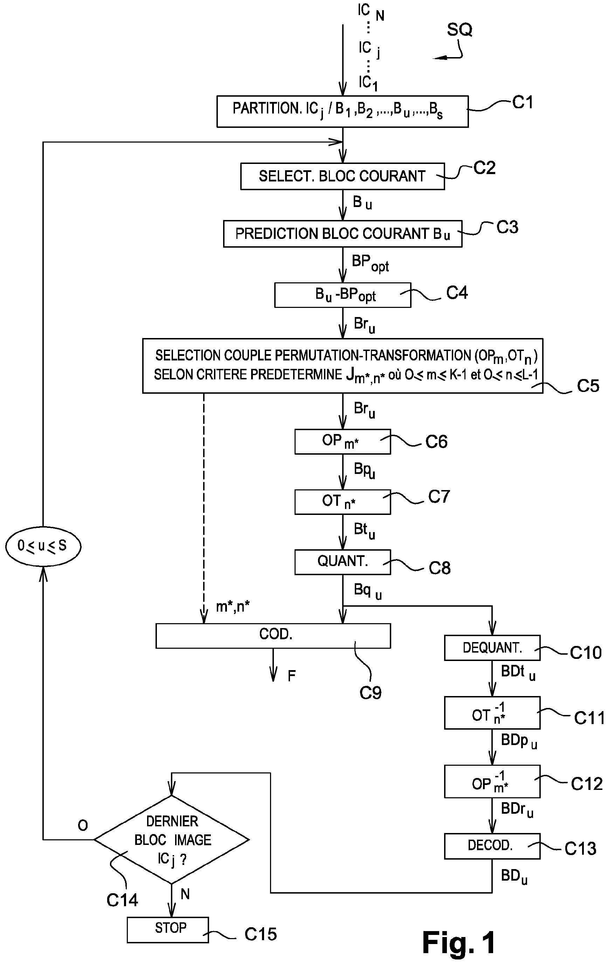

Dans ce mode de réalisation, le procédé de codage selon l'invention est par exemple implémenté de manière logicielle ou matérielle par modifications d'un codeur initialement conforme à la norme HEVC. Le procédé de codage selon l'invention est représenté sous la forme d'un algorithme comportant des étapes C1 à C15 telles que représentées à la **figure 1.**

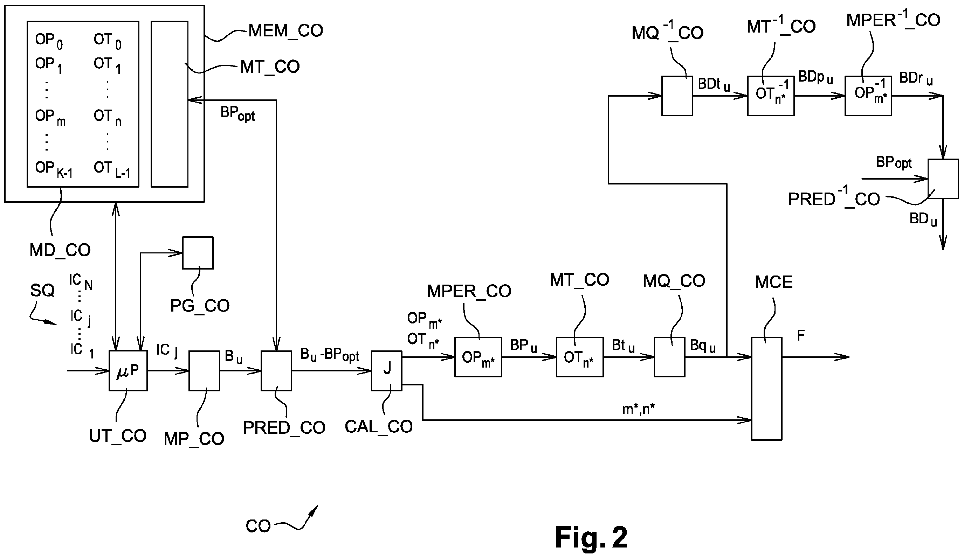

Selon le mode de réalisation de l'invention, le procédé de codage selon l'invention est implémenté dans un dispositif de codage CO représenté à la **figure 2.**

Comme illustré en **figure 2,** un tel dispositif de codage comprend une mémoire MEM_CO comprenant une mémoire tampon MT_CO, une unité de traitement UT_CO équipée par exemple d'un microprocesseur $\mu$P et pilotée par un programme d'ordinateur PG_CO qui met en oeuvre le procédé de codage selon l'invention. A l'initialisation, les instructions de code du programme d'ordinateur PG_CO sont par exemple chargées dans une mémoire RAM (non représentée) avant d'être exécutées par le processeur de l'unité de traitement UT_CO.

Le procédé de codage représenté sur la **figure 1** s'applique à toute image courante d'une séquence SQ d'images à coder.

Au cours d'une étape C1 représentée à la **figure 1,** il est procédé, de façon connue en soi, au partitionnement d'une image courante $IC_j$ appartenant à la séquence SQ d'images $IC_1$, ..., $IC_j$,..., $IC_N$ ($1 \leq j \leq N$), en une pluralité de blocs $B_1$, $B_2$, ..., $B_u$,..., $B_S$ ($1 \leq u \leq S$) de taille donnée, des valeurs de taille typiques étant 64x64, 32x32 ou 16x16 pixels. Une telle étape de partitionnement est mise en oeuvre par un module logiciel de partitionnement MP_CO représenté sur la **figure 2,** lequel module est piloté par le microprocesseur $\mu$P de l'unité de traitement UT_CO.

Il convient de noter qu'au sens de l'invention, le terme « bloc » signifie unité de codage (de l'anglais « coding unit »). Cette dernière terminologie est notamment utilisée dans la norme HEVC, par exemple dans le document « Recommendation ITU-T H.265 / Norme ISO/IEC 23008-2».

En particulier, une telle unité de codage regroupe des ensembles de pixels de forme rectangulaire ou carrée, encore appelés blocs, macroblocs, ou bien des ensembles de pixels présentant d'autres formes géométriques.

De manière préférentielle dans l'invention, les blocs à coder sont particulièrement de taille multiple de puissance de 2, par exemple de type 4x4 et 8x8. Toutefois, l'invention s'applique également plus généralement à des blocs de taille MxM (M=16,32 ou 64). Des blocs PxM et MxP sont également utilisables avec P et M prenant leur valeur dans l'ensemble 2, 4, 8, 16, 32 et 64.

Lesdits blocs $B_1$, $B_2$, ..., $B_u$,..., $B_S$ sont destinés à être codés selon un ordre de parcours prédéterminé, qui est par exemple du type raster scan. Cela signifie que les blocs sont codés les uns après les autres, de la gauche vers la droite, puis vers le bas.

D'autres types de parcours sont bien sûr possibles. Ainsi, il est possible de découper l'image $IC_j$ en plusieurs sous-images appelées slices et d'appliquer indépendamment un découpage de ce type sur chaque sous-image. Il est également possible de coder non pas une succession de lignes, comme expliqué ci-dessus, mais une succession de colonnes. Il est également possible de parcourir les lignes ou colonnes dans un sens ou dans l'autre

Chaque bloc peut par ailleurs être lui-même divisé en sous blocs qui sont eux-mêmes subdivisibles.

Au cours d'une étape C2 représentée à la **figure 1,** le codeur CO sélectionne comme bloc courant un premier bloc à coder $B_u$ de l'image $IC_j$, tel que par exemple le premier bloc $B_1$.

Au cours d'une étape C3 représentée à la **figure 1,** il est procédé à la prédiction du bloc courant $B_u$ par des techniques connues de prédiction intra et/ou inter. A cet effet, le bloc $B_u$ est prédit par rapport à au moins un bloc prédicteur conformément à un mode de prédiction sélectionné parmi une pluralité de modes de prédiction prédéterminés.

Un tel bloc prédicteur est par exemple un bloc de pixels qui a été déjà codé ou bien codé puis décodé ou non. Un tel bloc prédicteur est préalablement stocké dans la mémoire tampon MT_CO du codeur CO telle que représentée à la **figure 2.**

A l'issue de l'étape C3 de prédiction, un bloc prédicteur optimal $BP_{opt}$ est obtenu suite à une mise en compétition desdits modes de prédiction prédéterminés, par exemple par minimisation d'un critère débit-distorsion bien connu de l'homme du métier. Le bloc $BP_{opt}$ est considéré comme une approximation du bloc courant $B_u$. Les informations relatives à cette prédiction sont destinées à être inscrites dans un signal ou flux de données à transmettre à un décodeur. De telles informations comprennent notamment le type de prédiction (inter ou intra), et le cas échéant, le mode de prédiction sélectionné, le type de partitionnement du bloc courant si ce dernier a été subdivisé, l'indice d'image de référence et le vecteur mouvement utilisés dans le cas où un mode de prédiction inter a été sélectionné. Ces informations sont compressées par le codeur CO.

Au cours d'une étape C4 représentée à la **figure 1,** il est procédé à la comparaison des données relatives au bloc courant $B_u$ aux données du bloc prédicteur $BP_{opt}$. Plus précisément, au cours de cette étape, il est procédé classiquement au calcul de la différence entre le bloc prédicteur obtenu $BP_{opt}$ et le bloc courant $B_u$.

Un ensemble de données résiduelles, appelé bloc résidu $Br_u$ est alors obtenu à l'issue de l'étape C4.

Les étapes C3 et C4 sont mises en oeuvre par un module logiciel de codage prédictif PRED_CO représenté sur la **figure 2,** lequel module est piloté par le microprocesseur μP de l'unité de traitement UT_CO.

Au cours d'une étape C5 représentée à la **figure 1,** il est procédé à la sélection, selon un critère prédéterminé, d'un couple d'opérations mathématiques comprenant une opération de permutation $OP_{m*}$ et une opération de transformation $OT_{n*}$ parmi respectivement une pluralité d'opérations de permutation $OP_0$, $OP_1$,..., $OP_m$,..., $OP_{K-1}$, avec $0 \leq m \leq K-1$ et $0 \leq m^* \leq K-1$, et une pluralité d'opérations de transformation $OT_0$, $OT_1$,..., $OT_n$,..., $OT_{L-1}$, avec $0 \leq n \leq L-1$ et $0 \leq n^* \leq L-1$. La pluralité d'opérations de permutation et de transformation est stockée dans une mémoire dédiée MD_CO du codeur CO de la **figure 2.**

Une telle étape C5 est mise en oeuvre par un module logiciel de calcul CAL_CO représenté sur la **figure 2,** lequel module est piloté par le microprocesseur μP de l'unité de traitement UT_CO.

La pluralité d'opérations de transformation $OT_0$, $OT_1$,..., $OT_n$,..., $OT_{L-1}$ comprend une ou plusieurs transformées de type 1D.

Par transformée 1D, on entend une transformée discrète de taille MxM opérant sur des vecteurs de taille M. A cet effet :

- une première opération de transformation est appliquée vecteur par vecteur sur un bloc de taille MxM,
- une opération de transposition est appliquée sur le bloc transformé,
- une seconde opération de transformation est appliquée sur le bloc obtenu après transposition, également vecteur après vecteur.

Cette transformée 1D repose sur des bases exprimées sous forme trigonométrique telles que le sont les transformées en sinus discrètes (DST) ou cosinus discrètes (DCT). De manière préférentielle, les transformées appartenant à la pluralité de transformées $OT_0$, $OT_1$,..., $OT_n$,..., $OT_{L-1}$ sont des transformées DCT du type II, III et IV et des transformées DST du type IV, VI et VII qui sont décrites dans le document « Relationship between DCT-II, DCT-VI, AND DST-VII TRANSFORMS », Reznik ICASSP 2013.

Parmi ces transformées, la DCT de type II, de type III, et la DST de type VII et de type IV sont particulièrement intéressantes pour leur capacité à rendre le signal résiduel compact dans le domaine fréquentiel.

De telles transformées sont par exemple de taille 4x4, 8x8 etc.

En variante, les transformées utilisées peuvent être de type alterné, c'est-à-dire qu'une transformée d'un premier type et qu'une transformée d'un second type sont appliquées respectivement sur les lignes et sur les colonnes du bloc résidu courant $Br_u$ dont les données ont été préalablement permutées comme cela sera décrit ci-dessous dans la description.

Selon cette variante, les transformées précitées peuvent être aussi rectangulaires. Pour un bloc résidu courant $Br_u$ de forme rectangulaire, la transformée ligne aura une taille différente de la transformée colonne.

Il convient de noter que la combinaison de la transformée ligne et de la transformée colonne peut être appliquée directement au bloc résidu courant $Br_u$.

Dans le domaine du codage/décodage vidéo, en vue de permettre une implémentation sur processeurs à virgule fixe, de telles transformées sont approximées, c'est-à-dire que les valeurs réelles sont approximées par des nombres rationnels. On ne retrouve donc pas exactement les transformées stricto sensu mais sous une forme approximée.

Ainsi, par exemple, dans le cas d'une transformée DST VII de taille 4, cette dernière peut s'exprimer selon l'équation :

$$S_{i,k} = \frac{2}{3}\sin\left[\pi \cdot \frac{(2k+1)(i+1)}{9}\right] \text{ avec } 0 \le i < 4 \text{ et } 0 \le k < 4$$

La matrice 4x4 de coefficients suivante est alors obtenue, avec i évoluant suivant les colonnes et k évoluant suivant les lignes :

| | | | |
|---|---|---|---|
| 0.2280 | 0.4285 | 0.5774 | 0.6565 |
| 0.5774 | 0.5774 | 0.0000 | 0.5774 |
| 0.6565 | 0.2280 | 0.5774 | 0.4285 |
| 0.4285 | 0.6565 | 0.5774 | 0.2280 |

Lesdites valeurs de coefficient ci-dessus peuvent être également représentées sous forme de fractions de la façon suivante, ce qui permet une implémentation efficace en virgule fixe:

| | | | |
|---|---|---|---|
| 29/128 | 55/128 | 74/128 | 84/128 |
| 74/128 | 74/128 | 0 | -74/128 |
| 84/128 | -29/128 | -74/128 | 55/128 |
| 55/128 | -84/128 | 74/128 | -29/128 |

La pluralité d'opérations de permutation $OP_0$, $OP_1$,..., $OP_m$,..., $OP_{K-1}$ comprend une ou plusieurs opérations de permutation. Au sens de l'invention, une opération de permutation, dont un exemple est représenté ci-dessous, est définie sous la forme d'une matrice contenant uniquement des 1 et des 0. Dans l'exemple représenté ci-dessous, une telle matrice de permutation s'applique à un ensemble $E_{EN}$ de coefficients successifs, par exemple au nombre de seize pour un bloc de taille 4x4, d'indices respectifs $I_0$, $I_1$, $I_2$, $I_3$, $I_4$, $I_5$, $I_6$, $I_7$, $I_8$, $I_9$, $I_{10}$, $I_{11}$, $I_{12}$, $I_{13}$, $I_{14}$, $I_{15}$.

| $E_{SO}$ | matrice de permutation | | | | | | | | | | | | | | | | $E_{EN}$ |
|---|---|---|---|---|---|---|---|---|---|---|---|---|---|---|---|---|---|
| $I_3$ | 0 | 0 | 0 | 1 | 0 | 0 | 0 | 0 | 0 | 0 | 0 | 0 | 0 | 0 | 0 | 0 | $I_0$ |
| $I_2$ | 0 | 0 | 1 | 0 | 0 | 0 | 0 | 0 | 0 | 0 | 0 | 0 | 0 | 0 | 0 | 0 | $I_1$ |
| $I_1$ | 0 | 1 | 0 | 0 | 0 | 0 | 0 | 0 | 0 | 0 | 0 | 0 | 0 | 0 | 0 | 0 | $I_2$ |
| $I_0$ | 1 | 0 | 0 | 0 | 0 | 0 | 0 | 0 | 0 | 0 | 0 | 0 | 0 | 0 | 0 | 0 | $I_3$ |
| $I_7$ | 0 | 0 | 0 | 0 | 0 | 0 | 0 | 1 | 0 | 0 | 0 | 0 | 0 | 0 | 0 | 0 | $I_4$ |
| $I_6$ | 0 | 0 | 0 | 0 | 0 | 0 | 1 | 0 | 0 | 0 | 0 | 0 | 0 | 0 | 0 | 0 | $I_5$ |
| $I_5$ | 0 | 0 | 0 | 0 | 0 | 1 | 0 | 0 | 0 | 0 | 0 | 0 | 0 | 0 | 0 | 0 | $I_6$ |
| $I_4$ | 0 | 0 | 0 | 0 | 1 | 0 | 0 | 0 | 0 | 0 | 0 | 0 | 0 | 0 | 0 | 0 | $I_7$ |
| $I_{11}$ | 0 | 0 | 0 | 0 | 0 | 0 | 0 | 0 | 0 | 0 | 0 | 1 | 0 | 0 | 0 | 0 | $I_8$ |
| $I_{10}$ | 0 | 0 | 0 | 0 | 0 | 0 | 0 | 0 | 0 | 0 | 1 | 0 | 0 | 0 | 0 | 0 | $I_9$ |
| $I_9$ | 0 | 0 | 0 | 0 | 0 | 0 | 0 | 0 | 0 | 1 | 0 | 0 | 0 | 0 | 0 | 0 | $I_{10}$ |
| $I_8$ | 0 | 0 | 0 | 0 | 0 | 0 | 0 | 0 | 1 | 0 | 0 | 0 | 0 | 0 | 0 | 0 | $I_{11}$ |
| $I_{15}$ | 0 | 0 | 0 | 0 | 0 | 0 | 0 | 0 | 0 | 0 | 0 | 0 | 0 | 0 | 0 | 1 | $I_{12}$ |
| $I_{14}$ | 0 | 0 | 0 | 0 | 0 | 0 | 0 | 0 | 0 | 0 | 0 | 0 | 0 | 0 | 1 | 0 | $I_{13}$ |
| $I_{13}$ | 0 | 0 | 0 | 0 | 0 | 0 | 0 | 0 | 0 | 0 | 0 | 0 | 0 | 1 | 0 | 0 | $I_{14}$ |
| $I_{12}$ | 0 | 0 | 0 | 0 | 0 | 0 | 0 | 0 | 0 | 0 | 0 | 0 | 1 | 0 | 0 | 0 | $I_{15}$ |

A l'issue de l'opération de permutation ci-dessus, est obtenu un ensemble $E_{SO}$ d'indices permutés $I_3$, $I_2$, $I_1$, $I_6$, $I_7$, $I_6$, $I_5$, $I_4$, $I_{11}$, $I_{10}$, $I_9$, $I_8$, $I_{15}$, $I_{14}$, $I_{13}$, $I_{12}$. Une telle opération de permutation a pour avantage de ne pas engendrer de complexité calculatoire au niveau du codeur CO de la **figure 2**, puisqu'il s'agit juste d'une redirection des indices.

Plus précisément au cours de l'étape C5 précitée, il est procédé au choix du couple permutation-transformation à utiliser qui optimise les performances de codage du bloc courant $B_u$ à coder. Un tel choix peut s'effectuer selon plusieurs façons.

Selon un mode de réalisation, le critère de choix prédéterminé utilisé à l'étape C5 est le critère débit-distorsion bien connu de l'homme du métier qui consiste à mesurer une pondération de la distorsion après quantification avec le coût de transmission des échantillons quantifiés. Typiquement, pour un couple permutation $OP_m$ - transformation $OT_n$

considéré, le critère $J_{m,n}$ s'exprime de la façon suivante :

$$J_{m,n}(lambda) = \left\| x - OP_m{}^t OT_n{}^{-1} \lfloor Xm,n \rfloor \right\|^2 + lambda \cdot R(\lfloor Xm,n \rfloor) \, ,$$

où :

- Lambda est un opérateur lagrangien de pondération qui règle la contrainte de débit de transmission,
- $()^t$ est l'opérateur matriciel de transposition,
- $OT^{-1}{}_n$ représente la transformation inverse,
- $\lfloor X_{m,n} \rfloor$ représente l'approximation de $X_{m,n}$ réalisée suivant l'opérateur de quantification, $X_{m,n}$ étant le résultat de la transformation du bloc courant $B_u$ à coder par le couple d'opérations $OT_n$, $OP_m$ considéré.
- R() est une fonction calculant le débit nécessaire pour transmettre les valeurs quantifiées.

La fonction R peut être obtenue par codage complet des informations, c'est-à-dire en passant par le comptage des informations nécessaires à la transmission des valeurs quantifiées et codées, ou par une estimation du débit, par exemple qui peut s'appuyer sur un calcul de la somme des valeurs absolues des valeurs quantifiées ou sur un comptage des valeurs quantifiées à zéro.

A la suite d'une comparaison entre les différentes valeurs obtenues pour $J_{m,n}$, la plus faible valeur calculée par le module de calcul CAL_CO de la **figure 2** est retenue. Une telle valeur est notée $J_{m^*,n^*}$ et est associée à un couple d'opérations permutation $OP_{m^*}$ - transformation $OT_{n^*}$ considéré .

Dans un mode de réalisation simplifié de l'invention, la pluralité d'opérations de permutation comprend par exemple deux permutations $OP_0$ et $OP_1$, tandis que la pluralité d'opérations de transformation comprend une seule transformation $OT_0$, par exemple la DST de type VII. A cet effet, au cours de l'étape C5 précitée, seulement deux critères débit-distorsion sont calculés, à savoir :

- le critère $J_{0,0}$ qui dépend de la permutation $OP_0$ et de la transformation $OT_0$,
- et le critère $J_{1,0}$ qui dépend de la permutation $OP_1$ et de la permutation $OT_0$.

Le module de calcul CAL_CO de la **figure 2** compare les deux critères $J_{0,0}$ et $J_{1,0}$, retient celui qui a la plus faible valeur et associe un indice m*,n* à cette valeur. Ainsi, si $J_{0,0} < J_{1,0}$, alors m*,n*=0, sinon m*,n*=1.

Selon une variante du mode de réalisation de l'étape de sélection C5 précitée, cette dernière peut être effectuée conjointement avec la recherche du bloc prédicteur optimal $B_{opt}$ lors de l'étape de prédiction C3 précitée. Plus précisément, pour chaque mode de prédiction considéré, un couple permutation-transformation est déterminé comme minimisant le critère débit-distorsion $J_{m,n}$ précité. De cette façon, les informations de débit lors de l'estimation du critère $J_{m,n}$ tiennent compte de la transmission du mode de prédiction. Ainsi, toutes les combinaisons prédiction / permutation-transformation sont évaluées pour retenir celle qui minimise le critère débit-distorsion.

Une telle variante peut encore être étendue en prenant en compte différentes tailles possibles du bloc courant. L'intérêt d'un partitionnement en sous-blocs du bloc courant peut être décidé en tenant compte du critère débit-distorsion, par prise en compte des couples permutation-transformation disponibles.

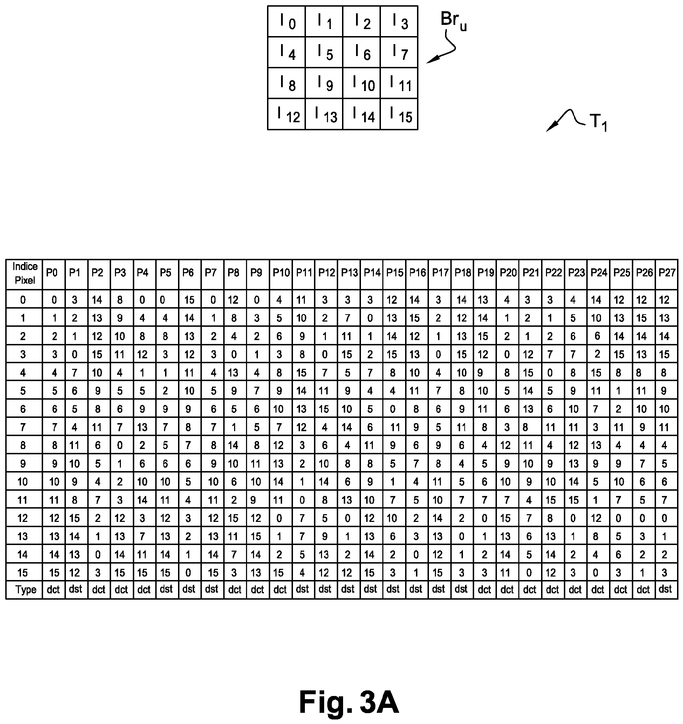

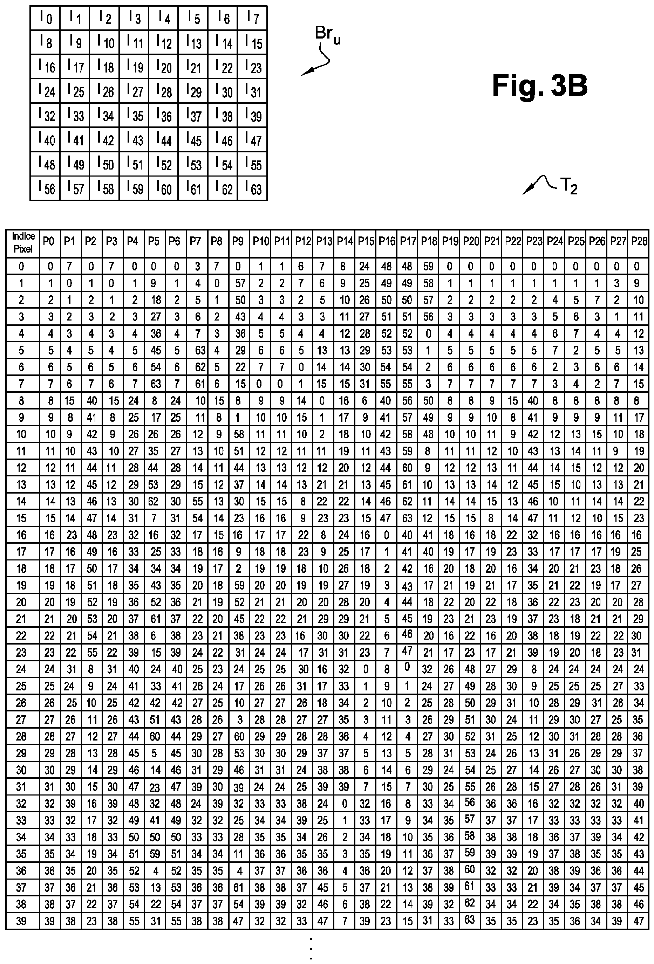

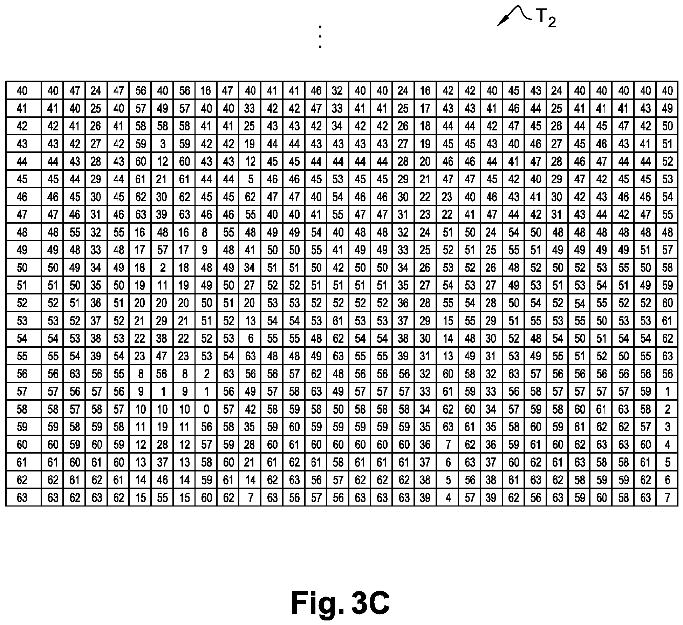

Des exemples de couples de transformation-permutation sont représentés en référence aux **figures 3A, 3B et 3C.**

Dans l'exemple de la **figure 3A,** un tableau T1 contient les couples de transformation-permutation qui sont destinés à s'appliquer à un bloc résidu courant $Br_u$ de taille 4x4 et d'indices de pixel successifs $I_0$ à $I_{15}$.

Dans l'exemple des **figures 3B** et **3C,** un tableau T2 contient les couples de transformation-permutation qui sont destinés à s'appliquer à un bloc résidu courant $Br_u$ de taille 8x8 et d'indices de pixel successifs $I_0$ à $I_{63}$.

En référence à la **figure 3A,** le tableau T1 comprend par exemple 28 permutations $P_0$ à $P_{27}$. La première colonne du tableau T1 intitulée « Indice de pixel » indique le numéro de l'indice de pixel considéré (entre 0 et 15) dans le bloc résidu courant $Br_u$. Les colonnes suivantes sont associées chacune à une permutation particulière ($P_0$ à $P_{27}$), la permutation $P_0$ étant appelée permutation « identité » car n'ayant aucun effet sur l'ordre des indices de pixels. Pour une permutation donnée, chaque indice de pixel indiqué par la colonne « Indice pixel » est remplacé par le numéro de l'indice de pixel indiqué par la valeur correspondante dans la colonne sélectionnée.

Chaque colonne $P_0$ à $P_{27}$ est associée à une transformée particulière de type DST ou DCT selon la permutation considérée, ladite transformée particulière étant indiquée dans la dernière ligne du tableau T1.

En référence aux **figures 3B** et **3C,** le tableau T2 comprend par exemple 29 permutations $P_0$ à $P_{28}$. La première colonne du tableau T2 intitulée « Indice de pixel » indique le numéro de l'indice de pixel considéré (entre 0 et 63) dans le bloc résidu courant $Br_u$. Les colonnes suivantes sont associées chacune à une permutation particulière ($P_0$ à $P_{28}$), la permutation $P_0$ étant appelée permutation « identité » car n'ayant aucun effet sur l'ordre des indices de pixels. Pour une permutation donnée, chaque indice de pixel indiqué par la colonne « Indice pixel » est remplacé par le numéro de l'indice de pixel indiqué par la valeur correspondante dans la colonne sélectionnée.

Dans l'exemple des **figures 3B** et **3C,** chaque permutation est associée à une même transformée de type DCT.

Les permutations indiquées dans les tableaux T1 et T2 sont établies par apprentissage. A cet effet, les permutations sont issues de transformations géométriques simples : inversion d'ordre de colonnes/lignes, déplacement de blocs, déplacement de lignes ou de colonnes.

Certaines permutations sont déterminées pour leur simplicité de mise en oeuvre, dans le sens où les transformations considérées sont légèrement affectées lorsque la relation inter pixel n'est pas modifiée, c'est-à-dire qu'après permutation, chaque pixel reste proche de ses voisins avant permutation. Une permutation privilégiée est par exemple un opérateur de transposition qui déplace de proche en proche les données du bloc de pixels, selon un sens prédéterminé. D'autres permutations sont envisagées.

Par exemple, dans le tableau T1 représenté à la **figure 3A** :

- la permutation $P_1$ est un opérateur miroir du bloc de pixels, les indices de pixels étant inversés les uns par rapport aux autres au moyen d'une symétrie verticale,
- la permutation $P_4$ permet d'inverser les indices de pixels par transposition, c'est-à-dire symétrie diagonale, par rapport à un angle à 45° partageant le bloc résidu $Br_u$.

Les différentes permutations ont été apprises par une étude des propriétés intrinsèques des blocs résidus. Suivant la puissance lumineuse du résidu moyen par pixel, les pixels sont réordonnés pour qu'ils soient compatibles avec une transformation particulière. Il est connu dans l'état de l'art que la DCT est appropriée pour coder des résidus ayant un profil de luminosité constant, c'est-à-dire que le bloc résidu a une luminosité relativement uniforme par pixel. La DST a un profil approprié pour des blocs résidus ayant moins de luminosité dans les pixels situés en haut du bloc (par exemple indices $I_0$ à $I_3$ sur la **figure 3A**) et à gauche (par exemple indices $I_0$ à $I_{12}$ sur la **figure 3A**).

Ainsi, en particulier dans le tableau T1 de la **figure 3A,** les permutations sont établies suivant la transformation indiquée dans la dernière ligne.

La permutation « identité » $P_0$ fait partie des permutations retenues, lorsque le bloc résidu $Br_u$ aura une forme compatible avec la transformation associée. En revanche lorsque le bloc résidu est incompatible avec la transformation associée, alors le critère débit-distorsion $J_{m,n}$ précité aura une bien plus faible valeur avec une autre permutation que la permutation $P_0$.

D'autres configurations de couples permutation-transformation sont bien entendu possibles et certaines seront mentionnées plus loin dans la description.

Au cours d'une étape C6 représentée à la **figure 1,** il est procédé à l'application de l'opération de permutation $OP_{m*}$ dudit couple d'opérations sélectionné aux données du bloc résidu courant $Br_u$, pour produire un bloc permuté $Bp_u$.

L'étape C6 est mise en oeuvre par un module logiciel MPER_CO de permutation, tel que représenté **figure 2,** lequel module est piloté par le microprocesseur $\mu$P de l'unité de traitement UT_CO.

Au cours d'une étape C7 représentée à la **figure 1,** il est procédé à l'application de l'opération de transformation $OT_{n*}$ dudit couple d'opérations sélectionné aux données du bloc permuté $Bp_u$, pour produire un bloc transformé $Bt_u$.

L'étape C7 est mise en oeuvre par un module logiciel MT_CO de transformation, tel que représenté **figure 2,** lequel module est piloté par le microprocesseur $\mu$P de l'unité de traitement UT_CO.

L'opération de transformation $OT_{n*}$ consiste à transformer le bloc permuté $Bp_u$ du domaine spatial vers le domaine fréquentiel sous la forme suivante :

$$X_{Bt_u} = B \cdot \left(Ax_{Bp_u}\right)^t$$

où :

- $x_{Bp_u}$ représente sous forme matricielle le bloc permuté courant $Bp_u$ dans le domaine spatial,
- $X_{Bt_u}$ représente sous forme matricielle le bloc obtenu dans le domaine transformé,
- $B$ et $A$ représentent des transformées 1D issues des familles présentées ci-dessus.

Notons que le résultat de la transformée peut également s'écrire sous la forme mathématiquement équivalente :

$$X = Sx$$

où :

- *X* et *x* se présentent alors sous forme de vecteurs,

- *S* représente une matrice transformée qui contient le carré du nombre d'éléments contenus dans *x*. La matrice *S* s'écrit comme un produit généralisé des matrices 1D B et A. En d'autres termes la matrice S est formée par construction d'une matrice MxM (M est la taille des transformées 1D), construite par répétition de la matrice A par blocs et multiplication de chacune des matrices A par un terme de la matrice B. Comme illustré ci-dessous, pour le cas M=4, la matrice S de type 16x16 est alors obtenue :

| $B_{0,0}{}^*A$ | $B_{0,1}{}^*A$ | $B_{0,2}{}^*A$ | $B_{0,3}{}^*A$ |
|---|---|---|---|
| $B_{1,0}{}^*A$ | $B_{1,1}{}^*A$ | $B_{1,2}{}^*A$ | $B_{1,3}{}^*A$ |
| $B_{2,0}{}^*A$ | $B_{2,1}{}^*A$ | $B_{2,2}{}^*A$ | $B_{2,3}{}^*A$ |
| $B_{3,0}{}^*A$ | $B_{3,1}{}^*A$ | $B_{3,2}{}^*A$ | $B_{3,3}{}^*A$ |

Dans un mode de réalisation préféré, ladite matrice S est une matrice représentative d'une DST.

L'opération de permutation $OP_{m^*}$ consiste à appliquer une permutation sur les entrées de la matrice $X_{Br_u}$ représentative du bloc résidu courant $Br_u$ appliquée aux pixels de la façon représentée ci-dessous :

| $Bp_u$ | matrice de permutation $P_m$ | | | | | | | | | | | | | | | | $Br_u$ |
|---|---|---|---|---|---|---|---|---|---|---|---|---|---|---|---|---|---|
| $I_3$ | 0 | 0 | 0 | 1 | 0 | 0 | 0 | 0 | 0 | 0 | 0 | 0 | 0 | 0 | 0 | 0 | $I_0$ |
| $I_2$ | 0 | 0 | 1 | 0 | 0 | 0 | 0 | 0 | 0 | 0 | 0 | 0 | 0 | 0 | 0 | 0 | $I_1$ |
| $I_1$ | 0 | 1 | 0 | 0 | 0 | 0 | 0 | 0 | 0 | 0 | 0 | 0 | 0 | 0 | 0 | 0 | $I_2$ |
| $I_0$ | 1 | 0 | 0 | 0 | 0 | 0 | 0 | 0 | 0 | 0 | 0 | 0 | 0 | 0 | 0 | 0 | $I_3$ |
| $I_7$ | 0 | 0 | 0 | 0 | 0 | 0 | 0 | 1 | 0 | 0 | 0 | 0 | 0 | 0 | 0 | 0 | $I_4$ |
| $I_6$ | 0 | 0 | 0 | 0 | 0 | 0 | 1 | 0 | 0 | 0 | 0 | 0 | 0 | 0 | 0 | 0 | $I_5$ |
| $I_5$ | 0 | 0 | 0 | 0 | 0 | 1 | 0 | 0 | 0 | 0 | 0 | 0 | 0 | 0 | 0 | 0 | $I_6$ |
| $I_4$ | 0 | 0 | 0 | 0 | 1 | 0 | 0 | 0 | 0 | 0 | 0 | 0 | 0 | 0 | 0 | 0 | $I_7$ |
| $I_{11}$ | 0 | 0 | 0 | 0 | 0 | 0 | 0 | 0 | 0 | 0 | 0 | 1 | 0 | 0 | 0 | 0 | $I_8$ |
| $I_{10}$ | 0 | 0 | 0 | 0 | 0 | 0 | 0 | 0 | 0 | 0 | 1 | 0 | 0 | 0 | 0 | 0 | $I_9$ |
| $I_9$ | 0 | 0 | 0 | 0 | 0 | 0 | 0 | 0 | 0 | 1 | 0 | 0 | 0 | 0 | 0 | 0 | $I_{10}$ |
| $I_8$ | 0 | 0 | 0 | 0 | 0 | 0 | 0 | 0 | 1 | 0 | 0 | 0 | 0 | 0 | 0 | 0 | $I_{11}$ |
| $I_{15}$ | 0 | 0 | 0 | 0 | 0 | 0 | 0 | 0 | 0 | 0 | 0 | 0 | 0 | 0 | 0 | 1 | $I_{12}$ |
| $I_{14}$ | 0 | 0 | 0 | 0 | 0 | 0 | 0 | 0 | 0 | 0 | 0 | 0 | 0 | 0 | 1 | 0 | $I_{13}$ |
| $I_{13}$ | 0 | 0 | 0 | 0 | 0 | 0 | 0 | 0 | 0 | 0 | 0 | 0 | 0 | 1 | 0 | 0 | $I_{14}$ |
| $I_{12}$ | 0 | 0 | 0 | 0 | 0 | 0 | 0 | 0 | 0 | 0 | 0 | 0 | 1 | 0 | 0 | 0 | $I_{15}$ |

La relation $X_{Bt_u} = SOP_{m^*}x_{Br_u}$ est alors obtenue,
où $P_m$ représente une matrice de permutation des indices de *x,* ce qui a pour effet une inversion des positions de pixel.

Au cours d'une étape C8 représentée à la **figure 1,** il est procédé à la quantification du bloc $Bt_u$ transformé, selon une opération classique de quantification, telle que par exemple une quantification scalaire ou vectorielle. Un bloc $Bq_u$ de coefficients quantifiés est alors obtenu. Une telle étape est effectuée au moyen d'un module logiciel de quantification MQ_CO tel que représenté à la **figure 2,** lequel module est piloté par le microprocesseur $\mu$P de l'unité de traitement UT_CO.

Au cours d'une étape C9 représentée à la **figure 1,** il est procédé au codage des données du bloc $Bq_u$ de coefficients quantifiés. Dans le mode préféré de réalisation, le codage effectué est un codage entropique de type arithmétique ou de Huffman qui est connu en tant que tel. L'étape C9 consiste alors à :

- lire le ou les symboles qui sont associés audit bloc courant,
- associer des informations numériques, telles que des bits, au(x) symbole(s) lu(s).

Une telle étape de codage entropique est mise en oeuvre par un module logiciel de codage entropique MCE représenté sur la **figure 2,** lequel module est piloté par le microprocesseur $\mu$P de l'unité de traitement UT_CO. Le module de codage entropique MCE est par exemple de type CABAC ("Context Adaptive Binary Arithmetic Coder" en anglais). Il peut également s'agir d'un codeur de Huffman connu en tant que tel.

Au cours de ladite étape C9, il est procédé éventuellement au codage de l'indice m*,n* du critère $J_{m^*,n^*}$ retenu à l'étape C5 précitée. Une telle étape est nécessaire, lorsque le décodeur n'est pas capable de retrouver cette information.

Si m*, n* doit être transmis au décodeur, il est alors par exemple exprimé sur un code binaire à longueur fixe.

Si par exemple, quatre valeurs de couples permutation-transformation : 0, 1, 2, 3 doivent être signalés,

- la valeur 0 est associée par exemple au code 00,
- la valeur 1 est associée par exemple au code 01,
- la valeur 2 est associée par exemple au code 10,
- la valeur 3 est associée par exemple au code 11.

En variante, l'indice m*,n* peut être exprimé à l'aide d'un code à longueur variable.

Dans le cas, par exemple, des quatre valeurs de couples permutation-transformation : 0, 1, 2, 3 à signaler:

- la valeur 0 est associée par exemple au code 0,
- la valeur 1 est associée par exemple au code 10,
- la valeur 2 est associée par exemple au code 110,
- la valeur 3 est associée par exemple au code 111.

Selon un mode privilégié de réalisation, la transmission de l'indice m*, n* est séparée en deux indicateurs :

- un drapeau signalant le premier bit des codes ci-dessus,
- et un élément de syntaxe complémentaire qui indique sous forme binaire les couples permutation-transformation moins probables.

Le drapeau est avantageusement codé à l'aide d'un codeur arithmétique séparé du codage du numéro de couple retenu. Un codeur de type CABAC est utilisé préférentiellement, avec un contexte particulier suivant la taille de la subdivision du bloc courant. Il est ainsi possible d'obtenir une réduction significative du coût de ce drapeau lorsque ce dernier est très fréquemment employé dans un état donné, c'est-à-dire que sa probabilité d'être à '0' ou à '1' est très élevée.

Ainsi, selon ce mode privilégié :

- la valeur 0 est associée par exemple au drapeau positionné à 0,
- la valeur 1 est associée par exemple au drapeau positionné à 1 avec complément 0,
- la valeur 2 est associée par exemple au drapeau positionné à 1 et complément 10,
- la valeur 3 est associée par exemple au drapeau positionné à 1 et complément 11.

Selon un autre mode de réalisation privilégié, l'indice m*,n* est transmis uniquement au moyen d'un drapeau. Ce mode privilégié est applicable dans le cas où une seule transformée, par exemple DST, est appliquée et où deux opérations de permutation $OP_0$ et $OP_1$ peuvent être appliquées en combinaison avec la DST. Le couple permutation-transformation $SOP_0$ ou $SOP_1$ sélectionné à l'étape C5 précitée sera alors signalé par un bit. Selon une convention donnée à titre d'exemple :

- la sélection du couple $SOP_0$ est représentée par un bit à '1',
- la sélection du couple $SOP_1$ est représentée par un bit à '0'.

Dans ce mode de réalisation privilégié, un codeur de type CABAC est utilisé préférentiellement, avec un contexte particulier suivant la taille de la subdivision du bloc courant. Il est ainsi possible d'obtenir une réduction significative du coût de ce drapeau lorsque ce dernier est très fréquemment employé dans un état donné, c'est-à-dire que sa probabilité d'être à '0' ou à '1' est très élevée.

Dans le cas où plus de deux couples permutation-transformation peuvent être sélectionnés, un code à longueur fixe ou variable sera utilisé.

Selon un autre mode de réalisation possible, il est procédé, au cours de l'étape C9, à un codage partiel de la valeur de l'indice m*, n*. Comme cela sera décrit plus loin dans la description, un tel mode de réalisation est possible, lorsque le décodeur est capable de retrouver lui-même tout ou partie de l'indice m*,n*.

En variante, cet autre mode de réalisation peut être également combiné avec la signalisation mise en oeuvre dans le mode de réalisation privilégié décrit plus haut.

Selon une configuration particulière donnée à titre d'exemple :

- dans le cas où une seule transformée S, par exemple DST, est appliquée et où une opération de permutation $OP_0$

est appliquée en combinaison avec la DST, le couple permutation-transformation $SOP_0$ sélectionné à l'étape C5 précitée sera alors signalé par un bit à '0',

- dans le cas où une seule transformée S, par exemple DST, est appliquée et où de multiples opérations de permutation peuvent être appliquées en combinaison avec la DST, le couple permutation-transformation sélectionné à l'étape C5 précitée sera alors signalé par un bit à '1'.

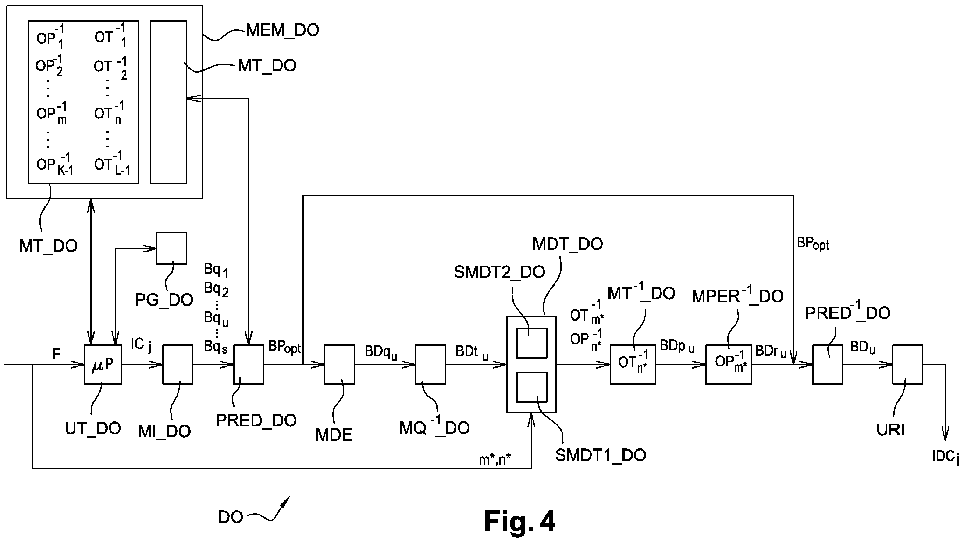

A l'issue de l'étape de codage C9, un signal ou flux de données F qui contient l'ensemble des données encodées du bloc de coefficients quantifiés $Bq_u$ et éventuellement la totalité ou une partie de l'indice m*,n* encodé est alors délivré. Un tel flux est ensuite transmis par un réseau de communication (non représenté), à un terminal distant. Celui-ci comporte le décodeur DO représenté à la **figure 4.** De façon connue en soi, le flux F comprend en outre certaines informations encodées par le codeur CO, telles que le type de prédiction (inter ou intra), et le cas échéant, le mode de prédiction sélectionné, le type de partitionnement du bloc si ce dernier a été partitionné, l'indice d'image de référence et le vecteur de mouvement utilisés dans le mode de prédiction inter.

Au cours d'une étape C10 représentée à la **figure 1,** il est procédé à la déquantification du bloc $Bq_u$ selon une opération classique de déquantification, qui est l'opération inverse de la quantification effectuée à l'étape C8. Un bloc de coefficients déquantifié $BDt_u$ est alors obtenu.

Une telle étape de déquantification est effectuée par un module logiciel de quantification inverse $Ma^{-1}\_CO$, tel que représenté à la **figure 2,** lequel module est piloté par le microprocesseur $\mu P$ de l'unité de traitement UT_CO.

Au cours d'une étape C11 représentée à la **figure 1,** il est procédé à l'application de l'opération de transformation $OT^{-1}_{n*}$, inverse de l'opération de transformation $OT_{n*}$, aux données du bloc de coefficients déquantifié $BDt_u$, pour produire un bloc permuté décodé $BDp_u$.

L'étape C11 est mise en oeuvre par un module logiciel $Mr^{-1}\_CO$ de transformation, tel que représenté **figure 2,** lequel module est piloté par le microprocesseur $\mu P$ de l'unité de traitement UT_CO.

Au cours d'une étape C12 représentée à la **figure 1,** il est procédé à l'application de l'opération de permutation $OP^{-1}_{m*}$, inverse de l'opération de permutation $OP_{m*}$, aux données du bloc permuté décodé $BDp_u$, pour produire un bloc résidu décodé $BDr_u$.

L'étape C12 est mise en oeuvre par un module logiciel $MPER^{-1}\_CO$ de permutation, tel que représenté **figure 2,** lequel module est piloté par le microprocesseur $\mu P$ de l'unité de traitement UT_CO.

Au cours d'une étape C13 représentée à la **figure 1,** il est procédé à la construction du bloc décodé $BD_u$ en ajoutant au bloc prédicteur $BP_{opt}$ obtenu à l'étape C3 précitée le bloc résidu décodé $BDr_u$. Il est à noter que ce dernier bloc est le même que le bloc décodé obtenu à l'issue du procédé de décodage de l'image $IC_j$ qui sera décrit plus loin dans la description. Le bloc décodé $BD_u$ est alors stocké dans la mémoire tampon MT_CO de la **figure 2,** afin d'être utilisé par le codeur CO comme bloc prédicteur d'un bloc suivant à coder.

Une telle étape est mise en oeuvre par un module logiciel de codage prédictif inverse $PRED^{-1}\_CO$ représenté sur la **figure 2,** lequel module est piloté par le microprocesseur $\mu P$ de l'unité de traitement UT_CO.

Au cours d'une étape C14 représentée à la **figure 1,** le codeur CO teste si le bloc courant $B_u$ qui vient d'être codé est le dernier bloc de l'image $IC_j$.

Si le bloc courant est le dernier bloc de l'image $IC_j$, au cours d'une étape suivante C15 représentée à la **figure 1,** il est mis fin au procédé de codage.

Si tel n'est pas le cas, il est procédé à nouveau à l'étape de sélection C2 du bloc suivant à coder conformément à l'ordre de parcours raster scan précité, puis les étapes C3 à C14 sont réitérées pour ce bloc suivant sélectionné.

Les étapes de codage qui viennent d'être décrites ci-dessus sont mises en oeuvre pour tous les blocs $B_1$, $B_2$, ..., $B_u$,..., $B_S$ à coder de l'image courante $IC_j$ considérée.

Configurations particulières de couples permutation-transformation

D'autres configurations possibles de couples permutation-transformation vont maintenant être mentionnées ci-dessous à titre d'exemples supplémentaires.

Selon un mode de réalisation, plutôt que d'utiliser l'ensemble des permutations et des transformations présentées ci-dessus, notamment en liaison avec les **figures 3A** à **3C,** il est proposé de restreindre cet ensemble.

Ainsi, pour des blocs de taille 4x4, par exemple, différents compromis, suivant le nombre de couples permutation-transformation, sont proposés ci-dessous.

A cet effet, est déterminé un mode 1+Y qui définit un nombre de couples permutation-transformation différents à utiliser.

Pour Y=0, le mode 1+0 définit un couple comprenant une transformation et une permutation « identité » $P_0$.

Pour Y>0, le mode 1+Y définit plusieurs couples formés à partir d'une combinaison d'une pluralité de transformations et d'une pluralité de permutations.

A titre d'exemples :

- pour Y=1, le mode 1+1 est un mode qui définit deux couples possibles de transformation et de permutation, où deux transformations différentes sont proposées : un couple formé d'une permutation « identité » $P_0$ et d'une transformation DST et un autre couple formé d'une permutation « identité » $P_0$ et d'une transformation DCT,
- pour Y=2, le mode 1+2 est un mode qui définit trois couples possibles de transformation et de permutation, où deux transformations différentes et trois permutations $P_0$, $P_1$, $P_2$ différentes sont proposées de façon à constituer les trois couples permutation-transformation suivants : $P_0$-DST, P1-DST, $P_2$-DCT.

Les modes 1+0, 1+1 et 1+2 précités offrent différents compromis de complexité qui permettent de réduire le nombre de transformations à utiliser, réduisant de ce fait le nombre de couples à tester lors du codage pour sélectionner le meilleur couple permutation-transformation.

Ainsi dans le mode 1+1, au cours de l'étape de sélection C5 représentée sur la **figure 1,** seules les transformations DCT et DST ont besoin d'être comparées conformément au critère débit-distorsion $J_{m,n}$, puisqu'une seule permutation possible est proposée.

Dans le mode 1+2, au cours de l'étape de sélection C5 précitée, seulement trois critères débit-distorsion ont besoin d'être comparés puisqu'il existe trois couples permutation-transformation selon un tel mode.

Le stockage des permutations peut aussi être réduit dans le cas où le nombre de couples permutation-transformation est limité.

Un ensemble de compromis suivant le nombre de couples permutation-transformation mis à disposition dans le codeur CO et suivant la taille des blocs est représenté ci-dessous.

Le mode $P_0$+dst, c'est-à-dire une approche purement dst, est mis en compétition avec un ensemble de couples permutation-transformation basés sur d'autres transformations, telles que la DCT par exemple.

Nombre de couples permutation-transformation pour les blocs de taille 4x4

| Mode | 1+1 | | 1+2 | | 1+3 | | 1+4 | | 1+8 | | 1+16 | |
|------|------|--------|------|--------|------|--------|------|--------|------|--------|------|--------|
| couple | Perm | Transf. | Perm | Transf. | Perm | Transf. | Perm | Transf. | Perm | Transf. | Perm | Transf. |
| 0 | $P_0$ | dst | $P_0$ | dst | $P_1$ | dst | $P_0$ | dst | $P_0$ | dst | $P_0$ | dst |
| 1 | $P_0$ | dct | $P_1$ | dst | $P_{27}$ | dst | $P_2$ | dst | $P_5$ | dst | $P_{11}$ | dst |
| 2 | | | $P_2$ | dct | $P_6$ | dst | $P_1$ | dst | $P_6$ | dst | $P_{12}$ | dst |
| 3 | | | | | | | $P_3$ | dct | $P_7$ | dst | $P_{13}$ | dst |
| 4 | | | | | | | $P_4$ | dct | $P_1$ | dst | $P_{14}$ | dst |
| 5 | | | | | | | | | $P_8$ | dct | $P_{15}$ | dst |
| 6 | | | | | | | | | $P_9$ | dct | $P_{16}$ | dst |
| 7 | | | | | | | | | $P_3$ | dct | $P_{17}$ | dst |
| 8 | | | | | | | | | $P_{10}$ | dct | $P_{18}$ | dst |
| 9 | | | | | | | | | | | $P_{19}$ | dct |
| 10 | | | | | | | | | | | $P_{20}$ | dct |
| 11 | | | | | | | | | | | $P_{21}$ | dct |
| 12 | | | | | | | | | | | $P_{22}$ | dct |
| 13 | | | | | | | | | | | $P_{23}$ | dct |
| 14 | | | | | | | | | | | $P_{24}$ | dct |
| 15 | | | | | | | | | | | $P_{25}$ | dct |
| 16 | | | | | | | | | | | $P_{26}$ | dct |

Nombre de couples permutation-transformation pour les blocs de taille 8x8

| Mode | 1+2 | | 1+3 | | 1+4 | | 1+8 | | 1+16 | |
|---|---|---|---|---|---|---|---|---|---|---|
| Couple | Perm | Transf. | Perm | Transf. | Perm | Transf. | Perm | Transf. | Perm | Transf. |
| 0 | $P_0$ | dct | $P_0$ | dct | $P_0$ | dct | $P_0$ | dct | $P_0$ | dct |
| 1 | $P_1$ | dct | $P_3$ | dct | $P_5$ | dct | $P_5$ | dct | $P_9$ | dct |
| 2 | $P_2$ | dct | $P_4$ | dct | $P_6$ | dct | $P_8$ | dct | $P_{10}$ | dct |
| 3 | | | $P_5$ | dct | $P_7$ | dct | $P_9$ | dct | $P_{11}$ | dct |
| 4 | | | | | $P_8$ | dct | $P_{16}$ | dct | $P_{12}$ | dct |
| 5 | | | | | | | $P_{17}$ | dct | $P_{13}$ | dct |
| 6 | | | | | | | $P_{18}$ | dct | $P_{14}$ | dct |
| 7 | | | | | | | $P_{22}$ | dct | $P_{15}$ | dct |
| 8 | | | | | | | $P_{23}$ | dct | $P_{19}$ | dct |
| 9 | | | | | | | | | $P_{20}$ | dct |
| 10 | | | | | | | | | $P_{21}$ | dct |
| 11 | | | | | | | | | $P_{22}$ | dct |
| 12 | | | | | | | | | $P_{24}$ | dct |
| 13 | | | | | | | | | $P_{25}$ | dct |
| 14 | | | | | | | | | $P_{26}$ | dct |
| 15 | | | | | | | | | $P_{27}$ | dct |
| 16 | | | | | | | | | $P_{28}$ | dct |

Ainsi, le codage du bloc courant est amélioré efficacement en proposant au codeur CO une pluralité de couples permutation-transformation différents.

Il est également possible de combiner les tailles des couples permutation-transformation. Par exemple, un très bon compromis en complexité et qualité peut être réalisé en retenant le mode 1+2 pour les blocs 4x4 et le mode 1+8 pour le mode 8x8. Le codeur CO choisit alors la meilleure transformée 4x4 parmi celles proposées, de même pour la taille 8x8, par minimisation du critère débit-distorsion. Le choix combiné peut être réalisé lors du choix de la partition du bloc courant. A titre d'exemple, sont présentées ci-dessous les combinaisons suivantes avec leurs performances associées en termes de réduction du débit de transmission pour une qualité d'image donnée :

| Combinaison | Mode 4x4 | Mode 8x8 | Performance |
|---|---|---|---|
| 0 | 1+2 | $P_0$ + dct | -0.76% |
| 1 | 1+4 | $P_0$ + dct | -0.78% |
| 2 | 1+8 | $P_0$ + dct | -0.86% |
| 3 | 1+16 | $P_0$ + dct | -0.80% |
| 4 | 1+2 | 1+2 | -0.72% |
| 5 | 1+2 | 1+4 | -0.78% |
| 6 | 1+2 | 1+8 | -1.09% |
| 7 | 1+2 | 1+16 | -0.92% |
| 8 | $P_0$ + dst | 1+2 | -0.10% |
| 9 | $P_0$ + dst | 1+4 | -0.24% |
| 10 | $P_0$ + dst | 1+8 | -0.37% |
| 11 | $P_0$ 0 + dst | 1+16 | -0.41% |

En particulier, une réduction de débit de 1.09% est obtenue à l'aide de la combinaison 6 utilisant le mode 1+2 pour les blocs 4x4 et le mode 1+8 pour les blocs 8x8. Cette réduction de débit est tout à fait significative en codage vidéo, notamment pour une technique de faible complexité.

Dans le cas où le codeur CO de la **figure 2** n'a pas besoin de transmettre la totalité de l'indice m*,n* du critère $J_{m*,n*}$, des performances de codage accrues sont obtenues comme représenté ci-dessous:

| Mode 4x4 | Performance |
|----------|-------------|
| 1+2 | -4.36% |
| 1+4 | -6.13% |
| 1+8 | -8.28% |
| 1+16 | -10.35% |

Description détaillée de la partie décodage

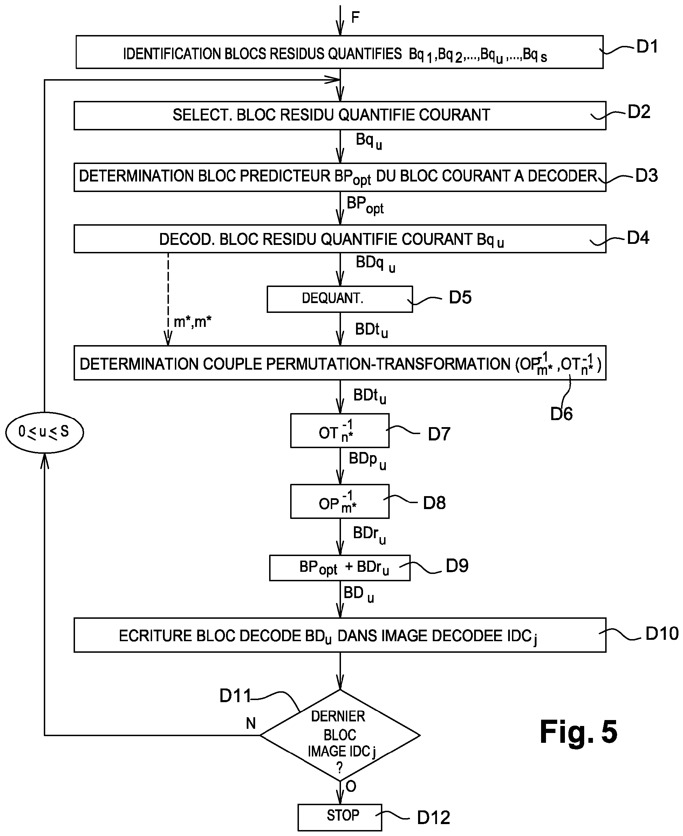

Un mode de réalisation du procédé de décodage selon l'invention va maintenant être décrit, dans lequel le procédé de décodage est implémenté de manière logicielle ou matérielle par modifications d'un décodeur initialement conforme à la norme HEVC. Le procédé de décodage selon l'invention est représenté sous la forme d'un algorithme comportant des étapes D1 à D12 telles que représentées à la **figure 5.**

Comme illustré en **figure 4,** le décodeur DO selon ce mode de réalisation de l'invention comprend une mémoire MEM_DO comprenant une mémoire tampon MT_DO, une unité de traitement UT_DO équipée par exemple d'un microprocesseur $\mu$P et pilotée par un programme d'ordinateur PG_DO qui met en oeuvre le procédé de décodage selon l'invention. A l'initialisation, les instructions de code du programme d'ordinateur PG_DO sont par exemple chargées dans une mémoire RAM avant d'être exécutées par le processeur de l'unité de traitement UT_DO.

Le procédé de décodage représenté sur la **figure 5** s'applique à toute image courante d'une séquence SQ d'images à décoder.

A cet effet, des informations représentatives de l'image courante $IC_j$ à décoder sont identifiées dans un signal ou flux de données F reçu au décodeur, tel que délivré à la suite du procédé de codage de la **figure 1.**

En référence à la **figure 5,** au cours d'une étape D1, il est procédé à l'identification dans ledit flux F des résidus quantifiés $Bq_1$, $Bq_2$,..., $Bq_u$, ...$Bq_S$ $(1 \leq u \leq S)$ associés respectivement aux blocs $B_1$, $B_2$, ..., $B_u$,..., $B_S$ codés précédemment conformément au parcours raster scan précité, conformément au procédé de codage de la **figure 1.**

Une telle étape d'identification est mise en oeuvre par un module d'identification MI_DO d'analyse de flux, tel que représenté à la **figure 4,** ledit module étant piloté par le microprocesseur $\mu$P de l'unité de traitement UT_DO.

Lesdits résidus quantifiés $Bq_1$, $Bq_2$, ..., $Bq_u$,..., $Bq_S$ sont destinés à être décodés selon un ordre de parcours prédéterminé, qui est par exemple séquentiel, c'est à dire que lesdits résidus sont destinés à être décodés l'un après l'autre conformément à l'ordre raster scan où ils ont été codés.

D'autres types de parcours que celui qui vient d'être décrit ci-dessus sont bien sûr possibles et dépendent de l'ordre de parcours choisi au codage, dont des exemples ont été mentionnés plus haut.

De manière préférentielle dans l'invention, les blocs à décoder sont particulièrement de taille multiple de puissance de 2, par exemple de type 4x4 et 8x8. Toutefois, l'invention s'applique également plus généralement à des blocs de taille MxM (M=16,32 ou 64). Des blocs PxM et MxP sont également utilisables avec P et M prenant leur valeur dans l'ensemble 2, 4, 8, 16, 32 et 64.

Chaque bloc peut par ailleurs être lui-même divisé en sous blocs qui sont eux-mêmes subdivisibles.

Au cours d'une étape D2 représentée à la **figure 5,** le décodeur DO de la **figure 4** sélectionne comme bloc courant un premier bloc résidu quantifié $Bq_u$.

Au cours d'une étape D3 représentée à la **figure 5,** il est procédé à la prédiction du bloc courant $B_u$ à décoder par des techniques connues de prédiction intra et/ou inter. A cet effet, le bloc $B_u$ à décoder est prédit par rapport à au moins un bloc prédicteur conformément à un mode de prédiction sélectionné parmi une pluralité de modes de prédiction prédéterminés.

En particulier, le mode de prédiction sélectionné est directement lu dans le flux F dans le cas où le codeur CO de la **figure 2** a signalé ce mode au décodeur DO de la **figure 4.**

Un tel bloc prédicteur est par exemple un bloc de pixels qui a été déjà décodé ou non. Un tel bloc prédicteur est préalablement stocké dans la mémoire tampon MT_DO du décodeur DO telle que représentée à la **figure 4.**

A l'issue de l'étape D3 de prédiction, un bloc prédicteur optimal $BP_{opt}$ conforme au mode de prédiction sélectionné est obtenu. Le bloc $BP_{opt}$ est une approximation du bloc courant $B_u$ à décoder. Les informations relatives à cette prédiction sont lues dans le flux de données F. De telles informations comprennent notamment le type de prédiction (inter ou intra), le type de partitionnement du bloc courant si ce dernier a été subdivisé, l'indice d'image de référence et le vecteur de mouvement utilisés dans le cas où un mode de prédiction inter a été sélectionné. Ces informations seront ultérieurement décodées de façon classique.

L'étape D3 est mise en oeuvre par un module logiciel de décodage prédictif PRED_DO représenté sur la **figure 4,** lequel module est piloté par le microprocesseur $\mu$P de l'unité de traitement UT_DO.

Au cours d'une étape D4 représentée à la **figure 5,** il est procédé au décodage des données du bloc $Bq_u$ résidu quantifié, pour produire un bloc résidu quantifié décodé $BDq_u$. Dans le mode préféré de réalisation, le décodage effectué est un décodage entropique de type arithmétique ou de Huffman qui est connu en tant que tel. L'étape D4 consiste alors à :

- lire le ou les symboles qui sont associés audit bloc courant à décoder,
- associer des informations numériques, telles que des bits, au(x) symbole(s) lu(s).

Une telle étape de décodage entropique est mise en oeuvre par un module logiciel de décodage entropique MDE représenté sur la **figure 4,** lequel module est piloté par le microprocesseur $\mu$P de l'unité de traitement UT_DO. Le module de décodage entropique MDE est par exemple de type CABAC. Il peut également s'agir d'un décodeur de Huffman connu en tant que tel.

Au cours d'une étape D5 représentée à la **figure 5,** il est procédé à la déquantification du bloc résidu quantifié $Bq_u$ selon une opération classique de déquantification, qui est l'opération inverse de l'opération de quantification effectuée à l'étape C7 de la **figure 1.** Un bloc déquantifié décodé $BDt_u$ est alors obtenu.

Une telle étape de déquantification est effectuée par un module logiciel de quantification inverse $MQ^{-1}$_DO, tel que représenté à la **figure 4,** lequel est piloté par le microprocesseur $\mu$P de l'unité de traitement UT_DO.

Au cours d'une étape D6 représentée à la **figure 5,** il est procédé à la détermination d'un couple d'opérations mathématiques comprenant une opération de transformation $OT^{-1}_{n*}$ et une opération de permutation $OP^{-1}_{m*}$ respectivement inverses des opérations de transformation $OT_{n*}$ et de permutation $OP_{m*}$, ledit couple étant conforme au critère prédéterminé $J_{m*,n*}$ retenu à l'étape de sélection C5 précitée de la **figure 1.**

Une telle étape D6 est mise en oeuvre par un module logiciel de détermination MDT_DO représenté sur la **figure 4,** lequel module est piloté par le microprocesseur $\mu$P de l'unité de traitement UT_DO.

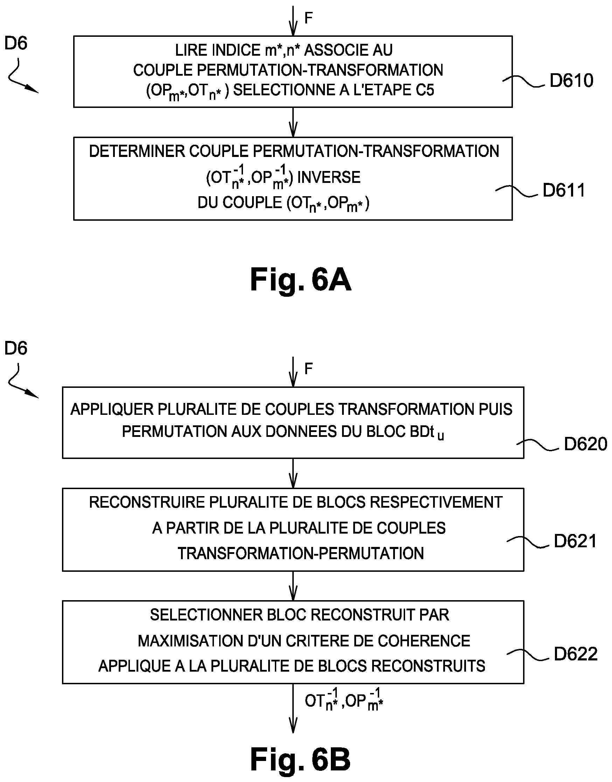

Comme représenté sur la **figure 6A,** dans le cas où l'indice m*,n* du critère $J_{m*,n*}$ retenu à l'étape C5 précitée a été transmis dans sa totalité dans le flux F à la suite de l'étape de codage C9 de la **figure 1,** l'étape de détermination D6 consiste à :

- au cours d'une sous-étape D610 représentée sur la **figure 6A,** lire cet indice dans le signal de données F pour retrouver le couple d'opérations de permutation $OP_{m*}$ et de transformation $OT_{n*}$ associé à l'indice lu,
- au cours d'une sous-étape D611 représentée sur la **figure 6A,** déterminer les opérations de permutation $OP^{-1}_{m*}$ et de transformation $OT^{-1}_{n*}$ respectivement inverses des opérations de permutation $OP_{m*}$ et de transformation $OT_{n*}$ du couple associé à l'indice lu.

De telles étapes sont nécessaires lorsque le décodeur DO de la **figure 4** n'est pas capable de retrouver lui-même la totalité de l'indice m*,n*.

Les sous-étapes D610 et D611 sont mises en oeuvre par un sous-module logiciel SMDT1_DO représenté sur la **figure 4.**

Au cours de ladite étape D6, il est procédé au décodage de l'indice m*,n*.

Plus précisément, le décodeur DO lit par exemple un code binaire à longueur fixe pour retrouver la valeur du couple permutation-transformation associé au critère $J_{m*,n*}$ et lui associer le couple permutation inverse-transformation inverse correspondant.

Dans le cas par exemple, comme cela a été décrit en liaison avec l'étape C9 précitée, où quatre valeurs de couples permutation-transformation : 0, 1, 2, 3 sont susceptibles d'être signalées dans le flux F,

- si le décodeur DO lit le code 00, il attribue la valeur 0 au couple permutation-transformation qui, au codage, a été associé au critère $J_{m*,n*}$,
- si le décodeur DO lit le code 01, il attribue la valeur 1 au couple permutation-transformation qui, au codage, a été associé au critère $J_{m*,n*}$,
- si le décodeur DO lit le code 10, il attribue la valeur 2 au couple permutation-transformation qui, au codage, a été associé au critère $J_{m*,n*}$,
- si le décodeur DO lit le code 11, il attribue la valeur 3 au couple permutation-transformation qui, au codage, a été associé au critère $J_{m*,n*}$.

Dans une variante qui a été décrite en liaison avec l'étape C9 précitée, l'indice m*,n* destiné à être lu par le décodeur DO est exprimé à l'aide d'un code à longueur variable.

Dans le cas par exemple, comme cela a été décrit en liaison avec l'étape C9 précitée, où quatre valeurs de couples permutation-transformation : 0, 1, 2, 3 sont susceptibles d'être signalées dans le flux F,

- si le décodeur DO lit le code 0, il attribue la valeur 0 au couple permutation-transformation qui, au codage, a été associé au critère $J_{m^*,n^*}$,
- si le décodeur DO lit le code 10, il attribue la valeur 1 au couple permutation-transformation qui, au codage, a été associé au critère $J_{m^*,n^*}$,
- si le décodeur DO lit le code 110, il attribue la valeur 2 au couple permutation-transformation qui, au codage, a été associé au critère $J_{m^*,n^*}$,
- si le décodeur DO lit le code 111, il attribue la valeur 3 au couple permutation-transformation qui, au codage, a été associé au critère $J_{m^*,n^*}$.

Selon un mode privilégié de réalisation décrit en liaison avec l'étape C9 précitée, l'indice m*,n* destiné à être lu par le décodeur DO comprend deux indicateurs :

- un drapeau signalant le premier bit du code associé au couple permutation-transformation $OP_{m^*}$, $OT_{n^*}$ sélectionné au codage, et
- un élément de syntaxe complémentaire qui indique sous forme binaire les couples permutation-transformation moins probables.

Dans le cas par exemple, comme cela a été décrit en liaison avec l'étape C9 précitée, où quatre valeurs de couples permutation-transformation : 0, 1, 2, 3 sont susceptibles d'être signalées dans le flux F,

- si le décodeur DO lit le drapeau '0', il attribue la valeur 0 au couple permutation-transformation qui, au codage, a été associé au critère $J_{m^*,n^*}$,
- si le décodeur DO lit le drapeau '1' et le complément binaire '0', il attribue la valeur 1 au couple permutation-transformation qui, au codage, a été associé au critère $J_{m^*,n^*}$,
- si le décodeur DO lit le drapeau '1' et le complément binaire '10', il attribue la valeur 2 au couple permutation-transformation qui, au codage, a été associé au critère $J_{m^*,n^*}$,
- si le décodeur DO lit le drapeau '1' et le complément binaire '11', il attribue la valeur 3 au couple permutation-transformation qui, au codage, a été associé au critère $J_{m^*,n^*}$.

Selon un autre mode de réalisation privilégié décrit en liaison avec l'étape C9 précitée, l'indice m*,n* destiné à être lu par le décodeur DO est constitué uniquement d'un drapeau. Cet autre mode privilégié est applicable dans le cas où une seule transformée, par exemple DST, est appliquée au codage et où deux opérations de permutation $OP_0$ et $OP_1$ sont susceptibles d'être appliquées en combinaison avec la DST.
A cet effet,

- si le décodeur DO lit un bit à '1', il attribue la valeur de ce bit au couple permutation-transformation $SOP_0$ qui, au codage, a été associé au critère $J_{m^*,n^*}$,
- si le décodeur DO lit un bit à '0', il attribue la valeur de ce bit au couple permutation-transformation $SOP_1$ qui, au codage, a été associé au critère $J_{m^*,n^*}$.

Dans le cas où plus de deux couples permutation-transformation sont susceptibles d'être signalés dans le flux F, le décodeur DO est adapté pour lire un code à longueur fixe ou variable.
Selon un autre mode de réalisation possible décrit en liaison avec l'étape C9 précitée, l'indice m*, n* n'est pas signalé dans le flux F ou seulement une partie de l'indice m*,n* est signalée dans le flux F.
Comme représenté sur la **figure 6B,** dans le cas où l'indice m*,n* du critère $J_{m^*,n^*}$ retenu à l'étape C5 précitée n'a pas été transmis dans le flux F à la suite de l'étape de codage C9 de la **figure 1,** l'étape de détermination D6 consiste à :

- au cours d'une sous-étape D620 représentée sur la **figure 6B,** appliquer aux données représentatives du bloc déquantifié décodé $BDt_u$ une pluralité de couples d'opérations mathématiques comprenant une opération de transformation suivie d'une opération de permutation, lesdites opérations de transformation et de permutation étant choisies parmi respectivement une pluralité prédéterminée d'opérations de transformation $OT^{-1}_0$, $OT^{-1}_1$,..., $OT^{-1}_n$,..., $OT^{-1}_{L-1}$, avec $0 \leq n \leq L-1$ et une pluralité prédéterminée d'opérations de permutation $OP^{-1}_0$, $OP^{-1}_1$,..., $OP^{-1}_m$,..., $OP^{-1}_{K-1}$, avec $0 \leq m \leq K-1$, lesquelles sont disponibles dans la mémoire MT_DO du décodeur DO de la **figure 4,**
- au cours d'une sous-étape D621 représentée sur la **figure 6B,** reconstruire une pluralité de blocs respectivement à partir de ladite pluralité de couples appliquée,

- au cours d'une sous-étape D622 représentée sur la **figure 6B,** sélectionner un bloc reconstruit parmi la pluralité de blocs reconstruits, par maximisation d'un critère de cohérence appliqué à la pluralité de blocs reconstruits.

A l'issue de la sous-étape D622, le couple d'opérations de transformation et de permutation associé au bloc reconstruit sélectionné est alors identifié.

Les sous-étapes D620 à D622 sont mises en oeuvre lorsque le décodeur DO de la **figure 4** est capable de retrouver lui-même la totalité de l'indice m\*,n\*.

De telles sous-étapes sont mises en oeuvre par un sous-module logiciel SMDT2_DO représenté sur la **figure 4.**

Le critère de cohérence précité consiste à mesurer la cohérence des pixels d'un bloc reconstruit considéré par rapport à leur voisinage. La mesure de cohérence peut être une mesure de continuité entre les pixels du bloc reconstruit et ses voisins, par calcul d'une somme des valeurs absolues des différences.

Selon encore une configuration particulière donnée à titre d'exemple et qui a été décrite en liaison avec l'étape C9 précitée :

- dans le cas où une seule transformée, par exemple DST, est susceptible d'être appliquée au codage ou au décodage et où une opération de permutation $OP_0$ est appliquée en combinaison avec la DST, si le décodeur DO lit un bit à '0', il attribue la valeur de ce bit au couple permutation-transformation $SOP_0$ qui, au codage, a été associé au critère $J_{m^*,n^*}$,

- dans le cas où une seule transformée, par exemple DST, est susceptible d'être appliquée et où de multiples opérations de permutation peuvent être appliquées en combinaison avec la DST, si le décodeur DO lit un bit à '1', il attribue la valeur de ce bit à la pluralité de couples permutation-transformation possibles, susceptibles d'être appliqués au décodage, et déduit de lui-même quel est le couple qui a été réellement signalé, par exemple à l'aide de mesures de cohérence.

La pluralité d'opérations de permutation $OP^{-1}_0$, $OP^{-1}_1$,..., $OP^{-1}_m$,..., $OP^{-1}_{K-1}$ correspond à l'inverse de la pluralité d'opérations de permutation $OP_0$, $OP_1$,..., $OP_m$,..., $OP_{K-1}$ dont des exemples ont été cités lors de la description ci-dessus du procédé de codage.

La pluralité d'opérations de transformation inverse $OT^{-1}_0$, $OT^{-1}_1$,..., $OT^{-1}_n$,..., $OT^{-1}_{L-1}$ correspond à l'inverse de la pluralité d'opérations de transformation $OT_0$, $OT_1$,..., $OT_n$,..., $OT_{L-1}$, dont des exemples ont été cités lors de la description ci-dessus du procédé de codage. Au cours d'une étape D7 représentée à la **figure 5**, il est procédé à l'application de l'opération de transformation $OT^{-1}_{n^*}$, inverse de l'opération de transformation $OT_{n^*}$, aux données du bloc de coefficients déquantifié $BDt_u$, pour produire un bloc permuté décodé $BDp_u$.

L'étape D7 est mise en oeuvre par un module logiciel $MT^{-1}$_DO de transformation, tel que représenté **figure 4,** lequel module est piloté par le microprocesseur µP de l'unité de traitement UT_DO.

Au cours d'une étape D8 représentée à la **figure 5,** il est procédé à l'application de l'opération de permutation $OP^{-1}_{m^*}$, inverse de l'opération de permutation $OP_{m^*}$, aux données du bloc permuté décodé $BDp_u$, pour produire un bloc résidu décodé $BDr_u$.

L'étape D8 est mise en oeuvre par un module logiciel $MPER^{-1}$_DO de permutation, tel que représenté **figure 4,** lequel module est piloté par le microprocesseur µP de l'unité de traitement UT_DO.

Au cours d'une étape D9 représentée à la **figure 5,** il est procédé à la reconstruction du bloc courant $B_u$ en ajoutant au bloc résidu courant décodé $BDr_u$ le bloc prédicteur $BP_{opt}$ obtenu à l'étape D3.

Ladite étape D9 est mise en oeuvre par un module logiciel de prédiction inverse $PRED^{-1}$_DO représenté sur la **figure 4,** lequel module est piloté par le microprocesseur µP de l'unité de traitement UT_DO.

Un bloc décodé $BD_u$ est alors obtenu et stocké dans la mémoire tampon MT_DO de la **figure 4,** afin d'être utilisé par le décodeur DO comme bloc prédicteur d'un bloc suivant à décoder.

Au cours d'une étape D10 représentée à la **figure 5,** ledit bloc décodé $BD_u$ est écrit dans une image décodée courante $IDC_j$. Une telle étape est mise en oeuvre un module logiciel URI de reconstruction d'image tel que représenté sur la **figure 4,** ledit module étant piloté par le microprocesseur µP du module de traitement UT_DO.

Au cours d'une étape D11 représentée à la **figure 5,** le décodeur DO teste si le bloc courant $BD_u$ qui vient d'être décodé est le dernier bloc contenu dans le flux F.

Si tel est le cas, au cours d'une étape D12 représentée à la **figure 5,** il est mis fin au procédé de décodage.

Si tel n'est pas le cas, il est procédé, au cours de l'étape D2, à la sélection du bloc résidu suivant à décoder conformément à l'ordre de parcours raster scan précité.

Les étapes de décodage qui viennent d'être décrites ci-dessus sont mises en oeuvre pour tous les blocs $B_1$, $B_2$, ..., $B_u$,..., $B_S$ à décoder de l'image courante $IC_j$ considérée.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

Ainsi, le procédé de codage et/ou de décodage selon l'invention, au lieu de s'appliquer à des blocs courants de taille 4x4 ou 8x8, peut également s'appliquer à des blocs courants ayant différentes tailles possibles, telles que par exemple 16x16 et 32x32.

## Revendications

**1.** Procédé de codage d'au moins une image ($IC_j$) découpée en blocs, comprenant, pour un bloc courant ($B_u$) à coder, les étapes de :

- prédiction (C3) du bloc courant à l'aide d'au moins un bloc prédicteur ($BP_{opt}$),
- détermination (C4) d'un bloc résidu de données représentatif de la différence entre le bloc prédicteur et le bloc courant,
- sélection (C5), selon un critère de performance de codage prédéterminé, d'un couple d'opérations mathématiques comprenant une opération de permutation ($OP_{m*}$) et une opération de transformation ($OT_{n*}$) parmi respectivement une pluralité d'opérations de permutation ($OP_0$, $OP_1$,..., $OP_m$,..., $OP_{K-1}$), avec $0{\leq}m{\leq}K{-}1$ et $0{\leq}m*{\leq}K{-}1$, et une pluralité d'opérations de transformation ($OT_0$, $OT_1$,..., $OT_n$,..., $OT_{L-1}$), avec $0{\leq}n{\leq}L{-}1$ et $0{\leq}n*{\leq}L{-}1$,
- application (C6) de l'opération de permutation ($OP_{m*}$) dudit couple sélectionné aux données du bloc résidu déterminé,
- application (C7) de l'opération de transformation ($OT_{n*}$) dudit couple sélectionné aux données permutées,
- codage (C9) des données issues de ladite opération de transformation appliquée.

**2.** Procédé de codage selon la revendication 1, dans lequel ladite pluralité d'opérations de transformation ($OT_0$, $OT_1$,..., $OT_n$,..., $OT_{L-1}$) contient une transformée en sinus discrète.

**3.** Procédé de codage selon la revendication 1 ou la revendication 2, dans lequel ledit critère de performance de codage prédéterminé est la minimisation du coût débit-distorsion du bloc courant à coder.

**4.** Procédé de codage selon l'une quelconque des revendications 1 à 3, dans lequel l'opération de permutation sélectionnée consiste à déplacer de proche en proche les données du bloc résidu déterminé, conformément à une opération de transposition des données dudit bloc résidu.

**5.** Dispositif (CO) de codage d'au moins une image ($IC_j$) découpée en blocs, comprenant, pour un bloc courant à coder :

- des moyens (PRED_CO) pour prédire le bloc courant à l'aide d'au moins un bloc prédicteur ($BP_{opt}$),
- des moyens (PRED_CO) pour déterminer un bloc résidu de données représentatif de la différence entre le bloc prédicteur et le bloc courant,
- des moyens (CAL_CO) pour sélectionner, selon un critère de performance de codage prédéterminé, un couple d'opérations mathématiques comprenant une opération de permutation ($OP_{m*}$) et une opération de transformation ($OT_{n*}$) parmi respectivement une pluralité d'opérations de permutation ($OP_0$, $OP_1$,..., $OP_m$,..., $OP_{K-1}$), avec $0{\leq}m{\leq}K{-}1$ et $0{\leq}m*{\leq}K{-}1$, et une pluralité d'opérations de transformation ($OT_0$, $OT_1$,..., $OT_n$,..., $OT_{L-1}$), avec $0{\leq}n{\leq}L{-}1$ et $0{\leq}n*{\leq}L{-}1$,
- des moyens de permutation (MPER_CO) pour appliquer l'opération de permutation ($OP_{m*}$) dudit couple sélectionné aux données du bloc résidu déterminé,
- des moyens de transformation (MT_CO) pour appliquer l'opération de transformation ($OT_{n*}$) dudit couple sélectionné aux données permutées,
- des moyens de codage (MCE) pour coder les données délivrées par lesdits moyens de transformation (MT_CO).

**6.** Programme d'ordinateur comportant des instructions de code de programme pour l'exécution des étapes du procédé de codage selon l'une quelconque des revendications 1 à 4, lorsque ledit programme est exécuté sur un ordinateur.

**7.** Procédé de décodage d'un signal de données (F) représentatif d'au moins une image ($IC_j$) découpée en blocs, comprenant, pour un bloc courant ($B_u$) à décoder, les étapes de :

- détermination (D1), dans ledit signal de données, de données représentatives d'un bloc résidu courant associé au bloc courant à décoder,

- détermination (D3) d'au moins un bloc prédicteur ($BP_{opt}$) du bloc courant à décoder,
- détermination (D6) d'un couple d'opérations mathématiques comprenant une opération de transformation ($OT^{-1}_{n*}$) et une opération de permutation ($OP^{-1}_{m*}$),
- application (D7) de l'opération de transformation ($OT^{-1}_{n*}$) dudit couple d'opérations déterminé aux données représentatives d'un bloc résidu courant,
- application (D8) de l'opération de permutation ($OP^{-1}_{m*}$) dudit couple déterminé aux données obtenues à la suite de l'application de ladite opération de transformation,
- reconstruction (D9) du bloc courant ($B_u$) à l'aide dudit bloc prédicteur déterminé et des données issues de l'opération de permutation appliquée.

8. Procédé de décodage selon la revendication 7, dans lequel l'étape de détermination (D6) dudit couple d'opérations mathématiques met en oeuvre les étapes suivantes :

- lecture (D610), dans ledit signal de données, d'une information représentative du couple d'opérations de permutation et de transformation sélectionné au codage du bloc courant à décoder,
- détermination (D611) des opérations de permutation et de transformation respectivement inverses des opérations de permutation et de transformation du couple associé à l'information lue.

9. Procédé de décodage selon la revendication 7, dans lequel l'étape de détermination (D6) dudit couple d'opérations mathématiques consiste à :

- appliquer (D620) auxdites données représentatives du bloc résidu courant une pluralité de couples d'opérations mathématiques comprenant une opération de transformation suivie d'une opération de permutation, lesdites opérations de transformation et de permutation étant choisies parmi respectivement une pluralité prédéterminée d'opérations de transformation ($OT^{-1}_0$, $OT^{-1}_1$,.... $OT^{-1}_n$,.... $OT^{-1}_{L-1}$), avec $0 \le n \le L-1$ et une pluralité prédéterminée d'opérations de permutation ($OP^{-1}_0$, $OP^{-1}_1$,..., $OP^{-1}_m$,..., $OP^{-1}_{K-1}$), avec $0 \le m \le K-1$,
- reconstruire (D621) une pluralité de blocs respectivement à partir de ladite pluralité de couples appliquée,
- sélectionner (D622) un bloc reconstruit parmi la pluralité de blocs reconstruits, par maximisation d'un critère de cohérence appliqué à la pluralité de blocs reconstruits.

10. Procédé de décodage selon la revendication 8 ou la revendication 9, dans lequel ladite opération de transformation déterminée ou sélectionnée est une transformée en sinus discrète.

11. Procédé de décodage selon l'une quelconque des revendications 7 à 10, dans lequel l'opération de permutation dudit couple d'opérations déterminé consiste à déplacer de proche en proche lesdites données obtenues suite à l'application de l'opération de transformation du couple déterminé, conformément à une opération de transposition desdites données obtenues.

12. Dispositif (DO) de décodage d'un signal de données (F) représentatif d'au moins une image ($IC_j$) découpée en blocs, comprenant, pour un bloc courant à décoder :

- des moyens (MI_DO) pour déterminer, dans ledit signal de données, des données représentatives d'un bloc résidu courant associé au bloc courant à décoder,
- des moyens (PRED_DO) pour déterminer au moins un bloc prédicteur ($BP_{opt}$) du bloc courant à décoder,
- des moyens (MDT_DO) pour déterminer un couple d'opérations mathématiques comprenant une opération de transformation ($OT^{-1}_{n*}$) et une opération de permutation ($OP^{-1}_{m*}$),
- des moyens de transformation ($MT^{-1}$_DO) pour appliquer l'opération de transformation ($OT^{-1}_{n*}$) dudit couple déterminé aux données représentatives du bloc résidu courant,
- des moyens de permutation ($MPER^{-1}$_DO) pour appliquer l'opération de permutation ($OP^{-1}_{m*}$) dudit couple déterminé aux données transformées,
- des moyens de prédiction ($PRED^{-1}$_DO) pour reconstruire le bloc courant ($B_u$) à l'aide dudit bloc prédicteur déterminé et des données délivrées par lesdits moyens de permutation ($MPER^{-1}$_DO).

13. Programme d'ordinateur comportant des instructions pour mettre en oeuvre le procédé de décodage selon l'une quelconque des revendications 7 à 11, lorsque ledit procédé de décodage est exécuté sur un ordinateur.

**Patentansprüche**

1. Verfahren zur Codierung mindestens eines Bildes ($IC_j$), das in Blöcke unterteilt ist, umfassend für einen zu codierenden aktuellen Block ($B_u$) die folgenden Schritte:

   - Prädiktion (C3) des aktuellen Blocks mithilfe mindestens eines Prädiktorblocks ($BP_{opt}$)
   - Bestimmen (C4) eines Datenrestblocks, der für die Differenz zwischen dem Prädiktorblock und dem aktuellen Block repräsentativ ist,
   - Auswählen (C5) eines Paares mathematischer Vorgänge, umfassend einen Permutationsvorgang ($OP_{m*}$) und einen Transformationsvorgang ($OT_{n*}$), unter jeweils einer Vielzahl von Permutationsvorgängen ($OP_0$, $OP_1$,..., $OP_m$,..., $OP_{K-1}$) mit $0 \leq m \leq K-1$ und $0 \leq m* \leq K-1$ und einer Vielzahl von Transformationsvorgängen ($OT_0$, $OT_1$,..., $OT_n$,..., $OT_{L-1}$) mit $0 \leq n \leq L-1$ und $0 \leq n* \leq L-1$, nach einem vorgegebenen Codierungsleistungskriterium,
   - Anwenden (C6) des Permutationsvorgangs ($OP_{m*}$) des ausgewählten Paares auf die Daten des bestimmten Restblocks,
   - Anwenden (C7) des Transformationsvorgangs ($OT_{n*}$) des ausgewählten Paares auf die permutierten Daten,
   - Codieren (C9) der aus dem angewandten Transformationsvorgang hervorgegangenen Daten.

2. Codierungsverfahren nach Anspruch 1, wobei die Vielzahl von Transformationsvorgängen ($OT_0$, $OT_1$,..., $OT_n$,..., $OT_{L-1}$) eine diskrete Sinustransformation enthält.

3. Codierungsverfahren nach Anspruch 1 oder Anspruch 2, wobei das vorgegebene Codierungsleistungskriterium die Minimierung des Datenrate-Verzerrungs-Aufwands des zu codierenden aktuellen Blocks ist.

4. Codierungsverfahren nach einem der Ansprüche 1 bis 3, wobei der ausgewählte Permutationsvorgang darin besteht, die Daten des bestimmten Restblocks gemäß einem Vorgang zur Transposition der Daten des Restblocks nach und nach zu bewegen.

5. Vorrichtung (CO) zur Codierung mindestens eines Bildes ($IC_j$), das in Blöcke unterteilt ist, umfassend für einen zu codierenden aktuellen Block:

   - Mittel (PRED_CO) zur Prädiktion des aktuellen Blocks mithilfe mindestens eines Prädiktorblocks ($BP_{opt}$),
   - Mittel (PRED_CO) zum Bestimmen eines Datenrestblocks, der für die Differenz zwischen dem Prädiktorblock und dem aktuellen Block repräsentativ ist,
   - Mittel (CAL_CO) zum Auswählen eines Paares mathematischer Vorgänge, umfassend einen Permutationsvorgang ($OP_{m*}$) und einen Transformationsvorgang ($OT_{n*}$), unter jeweils einer Vielzahl von Permutationsvorgängen ($OP_0$, $OP_1$,..., $OP_m$,..., $OP_{K-1}$) mit $0 \leq m \leq K-1$ und $0 \leq m* \leq K-1$ und einer Vielzahl von Transformationsvorgängen ($OT_0$, $OT_1$,..., $OT_n$,..., $OT_{L-1}$) mit $0 \leq n \leq L-1$ und $0 \leq n* \leq L-1$ nach einem vorgegebenen Codierungsleistungskriterium,
   - Permutationsmittel (MPER_CO) zum Anwenden des Permutationsvorgangs ($OP_{m*}$) des ausgewählten Paares auf die Daten des bestimmten Restblocks,
   - Transformationsmittel (MT_CO) zum Anwenden des Transformationsvorgangs ($OT_{n*}$) des ausgewählten Paares auf die permutierten Daten,
   - Codierungsmittel (MCE) zum Codieren der von den Transformationsmitteln (MT_CO) gelieferten Daten.

6. Computerprogramm mit Programmcodeanweisungen zum Ausführen der Schritte des Codierungsverfahrens nach einem der Ansprüche 1 bis 4, wenn das Programm auf einem Computer ausgeführt wird.

7. Verfahren zur Decodierung eines Datensignals (F), das für mindestens ein Bild ($IC_j$), das in Blöcke unterteilt ist, repräsentativ ist, umfassend für einen zu decodierenden aktuellen Block ($B_u$) die folgenden Schritte:

   - Bestimmen (D1) von Daten, die für einen aktuellen Restblock repräsentativ sind, der dem zu decodierenden aktuellen Block zugeordnet ist, in dem Datensignal,
   - Bestimmen (D3) mindestens eines Prädiktorblocks ($BP_{opt}$) des zu decodierenden aktuellen Blocks,
   - Bestimmen (D6) eines Paares mathematischer Vorgänge, umfassend einen Transformationsvorgang ($0T^{-1}_{n*}$) und einen Permutationsvorgang ($OP^{-1}_{m*}$),
   - Anwenden (D7) des Transformationsvorgangs ($0T^{-1}_{n*}$) des bestimmten Vorgangspaares auf die Daten, die für einen aktuellen Restblock repräsentativ sind,
   - Anwenden (D8) des Permutationsvorgangs ($OP^{-1}_{m*}$) des bestimmten Paares auf die Daten, die nach der Anwendung des Transformationsvorgangs erhalten wurden,
- Rekonstruieren (D9) des aktuellen Blocks ($B_u$) mithilfe des bestimmten Prädiktorblocks und der aus dem angewandten Permutationsvorgang hervorgegangenen Daten.

8. Verfahren zur Decodierung nach Anspruch 7, wobei der Schritt des Bestimmens (D6) des Paares mathematischer Vorgänge die folgenden Schritte durchführt:

- Lesen (D610) einer Information, die für das Paar aus Permutations- und Transformationsvorgängen repräsentativ ist, das bei der Codierung des zu decodierenden aktuellen Blocks ausgewählt wurde, in dem Datensignal,
- Bestimmen (D611) der jeweils inversen Permutations- und Transformationsvorgänge zu den Permutations- und Transformationsvorgängen des Paares, das der gelesenen Information zugeordnet ist.

9. Verfahren zur Decodierung nach Anspruch 7, wobei der Schritt des Bestimmens (D6) des Paares mathematischer Vorgänge in Folgendem besteht:

- Anwenden (D620) einer Vielzahl von Paaren mathematischer Vorgänge, umfassend einen Transformationsvorgang gefolgt einem Permutationsvorgang, wobei die Transformations- und Permutationsvorgänge jeweils unter einer vorgegebenen Vielzahl von Transformationsvorgängen ($OT^{-1}_0$, $OT^{-1}_1$,..., $OT^{-1}_0$,..., $OT^{-1}_{L-1}$) mit $0 \leq n \leq L-1$ und einer vorgegebenen Vielzahl von Permutationsvorgängen ($OP^{-1}_0$, $OP^{-1}_1$,..., $OP^{-1}_m$,..., $OP^{-1}_{K-1}$) mit $0 \leq m \leq K-1$ gewählt werden, auf die Daten, die für den aktuellen Restblock repräsentativ sind,
- Rekonstruieren (D621) einer Vielzahl von Blöcken jeweils ausgehend von der angewandten Vielzahl von Paaren,
- Auswählen (D622) eines rekonstruierten Blocks unter der Vielzahl von rekonstruierten Blöcken durch Maximierung eines Kohärenzkriteriums, das auf die Vielzahl rekonstruierter Blöcke angewandt wird.

10. Verfahren zur Decodierung nach Anspruch 8 oder Anspruch 9, wobei der bestimmte oder ausgewählte Transformationsvorgang eine diskrete Sinustransformation ist.

11. Verfahren zur Decodierung nach einem der Ansprüche 7 bis 10, wobei der Permutationsvorgang des bestimmten Vorgangspaares darin besteht, die Daten, die nach der Anwendung des Transformationsvorgangs des bestimmten Paares erhalten wurden, gemäß einem Vorgang zur Transposition der erhaltenen Daten nach und nach zu bewegen.

12. Vorrichtung (DO) zur Decodierung eines Datensignals (F), das für mindestens ein Bild ($IC_j$), das in Blöcke unterteilt ist, repräsentativ ist, umfassend für einen zu decodierenden aktuellen Block:

- Mittel (MI_DO) zum Bestimmen der Daten, die für einen aktuellen Restblock repräsentativ sind, der dem zu decodierenden aktuellen Block zugeordnet ist, in dem Datensignal,
- Mittel (PRED_DO) zum Bestimmen mindestens eines Prädiktorblocks ($BP_{opt}$) des zu decodierenden aktuellen Blocks,
- Mittel (MDT_DO) zum Bestimmen eines Paares mathematischer Vorgänge, umfassend einen Transformationsvorgang ($OT^{-1}_{n*}$) und einen Permutationsvorgang ($OP^{-1}_{m*}$),
- Transformationsmittel ($MT^{-1}$_DO) zum Anwenden des Transformationsvorgangs ($OT^{-1}_{n*}$) des bestimmten Paares auf die Daten, die für den aktuellen Restblock repräsentativ sind,
- Permutationsmittel ($MPER^{-1}$_DO) zum Anwenden des Permutationsvorgangs ($OP^{-1}_{m*}$) des bestimmten Paares auf die transformierten Daten,
- Prädiktionsmittel ($PRED^{-1}$_DO) zum Rekonstruieren des aktuellen Blocks ($B_u$) mithilfe des bestimmten Prädiktorblocks und der Daten, die von den Permutationsmitteln ($MPER^{-1}$_DO) geliefert werden.

13. Computerprogramm mit Anweisungen zum Ausführen des Decodierungsverfahrens nach einem der Ansprüche 7 bis 11, wenn das Decodierungsverfahren auf einem Computer ausgeführt wird.

## Claims

1. Method for coding at least one image ($IC_j$) cut up into blocks, comprising, for a current block ($B_u$) to be coded, the steps of:

- prediction (C3) of the current block with the aid of at least one predictor block ($BP_{opt}$),
- determination (C4) of a residual data block representative of the difference between the predictor block and the current block,
- selection (C5), according to a predetermined coding performance criterion, of a pair of mathematical operations comprising a permutation operation ($OP_{m*}$) and a transformation operation ($OT_{n*}$) from among respectively a plurality of permutation operations ($OP_0$, $OP_1$,..., $OP_m$,..., $OP_{K-1}$), with $0 \leq m \leq K-1$ and $0 \leq m* \leq K-1$, and a plurality of transformation operations ($OT_0$, $OT_1$,..., $OT_n$,..., $OT_{L-1}$), with $0 \leq n \leq L-1$ and $0 \leq n* \leq L-1$,
- application (C6) of the permutation operation ($OP_{m*}$) of said selected pair to the data of the determined residual block,
- application (C7) of the transformation operation ($OT_{n*}$) of said selected pair to the permuted data,
- coding (C9) of the data arising from said applied transformation operation.

2. Coding method according to Claim 1, in which said plurality of transformation operations ($OT_0$, $OT_1$,..., $OT_n$,..., $OT_{L-1}$) contains a discrete sine transform.

3. Coding method according to Claim 1 or Claim 2, in which said predetermined coding performance criterion is the minimization of the bitrate-distortion cost of the current block to be coded.

4. Coding method according to any one of Claims 1 to 3, in which the selected permutation operation consists in gradually displacing the data of the determined residual block, in accordance with an operation of transposition of the data of said residual block.

5. Device (CO) for coding at least one image ($IC_j$) cut up into blocks, comprising, for a current block to be coded:

- means (PRED_CO) for predicting the current block with the aid of at least one predictor block ($BP_{opt}$),
- means (PRED_CO) for determining a residual data block representative of the difference between the predictor block and the current block,
- means (CAL_CO) for selecting, according to a predetermined coding performance criterion, a pair of mathematical operations comprising a permutation operation ($OP_{m*}$) and a transformation operation ($OT_{n*}$) from among respectively a plurality of permutation operations ($OP_0$, $OP_1$,..., $OP_m$,..., $OP_{K-1}$), with $0 \leq m \leq K-1$ and $0 \leq m* \leq K-1$, and a plurality of transformation operations ($OT_0$, $OT_1$,..., $OT_n$,..., $OT_{L-1}$), with $0 \leq n \leq L-1$ and $0 \leq n* \leq L-1$,
- permutation means (MPER_CO) for applying the permutation operation ($OP_{m*}$) of said selected pair to the data of the determined residual block,
- transformation means (MT_CO) for applying the transformation operation ($OT_{n*}$) of said selected pair to the permuted data,
- coding means (MCE) for coding the data delivered by said transformation means (MT_CO).

6. Computer program comprising program code instructions for the execution of the steps of the coding method according to any one of Claims 1 to 4, when said program is executed on a computer.

7. Method for decoding a data signal (F) representative of at least one image ($IC_j$) cut up into blocks, comprising, for a current block ($B_u$) to be decoded, the steps of:

- determination (D1), in said data signal, of data representative of a current residual block associated with the current block to be decoded,
- determination (D3) of at least one predictor block ($BP_{opt}$) of the current block to be decoded,
- determination (D6) of a pair of mathematical operations comprising a transformation operation ($OT^{-1}_{n*}$) and a permutation operation ($OP^{-1}_{m*}$),
- application (D7) of the transformation operation ($OT^{-1}_{n*}$) of said determined pair of operations to the data representative of a current residual block,
- application (D8) of the permutation operation ($OP^{-1}_{m*}$) of said determined pair to the data obtained subsequent to the application of said transformation operation,
- reconstruction (D9) of the current block ($B_u$) with the aid of said determined predictor block and of the data arising from the applied permutation operation.

8. Decoding method according to Claim 7, in which the step of determination (D6) of said pair of mathematical operations implements the following steps:

- reading (D610), in said data signal, of an information item representative of the pair of permutation and transformation operations selected on coding of the current block to be decoded,
- determination (D611) of the permutation and transformation operations respectively inverse to the permutation and transformation operations of the pair associated with the information item read.

9. Decoding method according to Claim 7, in which the step of determination (D6) of said pair of mathematical operations consists in:

- applying (D620) to said data representative of the current residual block a plurality of pairs of mathematical operations comprising a transformation operation followed by a permutation operation, said transformation and permutation operations being chosen from among respectively a predetermined plurality of transformation operations ($OT^{-1}_0$, $OT^{-1}_1$,..., $OT^{-1}_n$,..., $OT^{-1}_{L-1}$), with $0 \leq n \leq L-1$ and a predetermined plurality of permutation operations ($OP^{-1}_0$, $OP^{-1}_1$,..., $OP^{-1}$..., $OP^{-1}_{K-1}$), with $0 \leq m \leq K-1$,
- reconstructing (D621) a plurality of blocks respectively on the basis of said applied plurality of pairs,
- selecting (D622) a reconstructed block from among the plurality of reconstructed blocks, by maximizing a coherence criterion applied to the plurality of reconstructed blocks.

10. Decoding method according to Claim 8 or Claim 9, in which said determined or selected transformation operation is a discrete sine transform.

11. Decoding method according to any one of Claims 7 to 10, in which the permutation operation of said determined pair of operations consists in gradually displacing said data obtained subsequent to the application of the transformation operation of the determined pair, in accordance with an operation of transposition of said data obtained.

12. Device (DO) for decoding a data signal (F) representative of at least one image ($IC_j$) cut up into blocks, comprising, for a current block to be decoded:

- means (MI_DO) for determining, in said data signal, data representative of a current residual block associated with the current block to be decoded,
- means (PRED_DO) for determining at least one predictor block ($BP_{opt}$) of the current block to be decoded,
- means (MDT_DO) for determining a pair of mathematical operations comprising a transformation operation ($OT^{-1}_{n*}$) and a permutation operation ($OP^{-1}_{m*}$),
- transformation means ($MT^{-1}$_DO) for applying the transformation operation ($OT^{-1}_{n*}$) of said determined pair to the data representative of the current residual block,
- permutation means ($MPER^{-1}$-DO) for applying the permutation operation ($OP^{-1}_{m*}$) of said determined pair to the transformed data,
- prediction means ($PRED^{-1}$_DO) for reconstructing the current block ($B_u$) with the aid of said determined predictor block and of the data delivered by said permutation means ($MPER^{-1}$_DO).

13. Computer program comprising instructions for implementing the decoding method according to any one of Claims 7 to 11, when said decoding method is executed on a computer.

**Fig. 1**

Fig. 2

| Indice Pixel | P0 | P1 | P2 | P3 | P4 | P5 | P6 | P7 | P8 | P9 | P10 | P11 | P12 | P13 | P14 | P15 | P16 | P17 | P18 | P19 | P20 | P21 | P22 | P23 | P24 | P25 | P26 | P27 |
|---|---|---|---|---|---|---|---|---|---|---|---|---|---|---|---|---|---|---|---|---|---|---|---|---|---|---|---|---|
| 0 | 0 | 3 | 14 | 8 | 0 | 0 | 15 | 0 | 12 | 0 | 4 | 11 | 3 | 3 | 3 | 12 | 14 | 3 | 14 | 13 | 4 | 3 | 3 | 4 | 14 | 12 | 12 | 12 |
| 1 | 1 | 2 | 13 | 9 | 4 | 4 | 14 | 1 | 8 | 3 | 5 | 10 | 2 | 7 | 0 | 13 | 15 | 2 | 12 | 14 | 1 | 2 | 1 | 5 | 10 | 13 | 15 | 13 |
| 2 | 2 | 1 | 12 | 10 | 8 | 8 | 13 | 2 | 4 | 2 | 6 | 9 | 1 | 11 | 1 | 14 | 12 | 1 | 13 | 15 | 2 | 1 | 2 | 6 | 6 | 14 | 14 | 14 |
| 3 | 3 | 0 | 15 | 11 | 12 | 3 | 12 | 3 | 0 | 1 | 3 | 8 | 0 | 15 | 2 | 15 | 13 | 0 | 15 | 12 | 0 | 12 | 7 | 7 | 2 | 15 | 13 | 15 |
| 4 | 4 | 7 | 10 | 4 | 1 | 1 | 11 | 4 | 13 | 4 | 8 | 15 | 7 | 5 | 7 | 8 | 10 | 4 | 10 | 9 | 8 | 15 | 0 | 8 | 15 | 8 | 8 | 8 |
| 5 | 5 | 6 | 9 | 5 | 5 | 2 | 10 | 5 | 9 | 7 | 9 | 14 | 11 | 9 | 4 | 4 | 11 | 7 | 8 | 10 | 5 | 14 | 5 | 9 | 11 | 1 | 11 | 9 |
| 6 | 6 | 5 | 8 | 6 | 9 | 9 | 9 | 6 | 5 | 6 | 10 | 13 | 15 | 10 | 5 | 0 | 8 | 6 | 9 | 11 | 6 | 13 | 6 | 10 | 7 | 2 | 10 | 10 |
| 7 | 7 | 4 | 11 | 7 | 13 | 7 | 8 | 7 | 1 | 5 | 7 | 12 | 4 | 14 | 6 | 11 | 9 | 5 | 11 | 8 | 3 | 8 | 11 | 11 | 3 | 11 | 9 | 11 |
| 8 | 8 | 11 | 6 | 0 | 2 | 5 | 7 | 8 | 14 | 8 | 12 | 3 | 6 | 4 | 11 | 9 | 6 | 9 | 6 | 4 | 12 | 11 | 4 | 12 | 13 | 4 | 4 | 4 |
| 9 | 9 | 10 | 5 | 1 | 6 | 6 | 6 | 9 | 10 | 11 | 13 | 2 | 10 | 8 | 8 | 5 | 7 | 8 | 4 | 5 | 9 | 10 | 9 | 13 | 9 | 9 | 7 | 5 |
| 10 | 10 | 9 | 4 | 2 | 10 | 10 | 5 | 10 | 6 | 10 | 14 | 1 | 14 | 6 | 9 | 1 | 4 | 11 | 5 | 6 | 10 | 9 | 10 | 14 | 5 | 10 | 6 | 6 |
| 11 | 11 | 8 | 7 | 3 | 14 | 11 | 4 | 11 | 2 | 9 | 11 | 0 | 8 | 13 | 10 | 7 | 5 | 10 | 7 | 7 | 7 | 4 | 15 | 15 | 1 | 7 | 5 | 7 |
| 12 | 12 | 15 | 2 | 12 | 3 | 12 | 3 | 12 | 15 | 12 | 0 | 7 | 5 | 0 | 12 | 10 | 2 | 14 | 2 | 0 | 15 | 7 | 8 | 0 | 12 | 0 | 0 | 0 |
| 13 | 13 | 14 | 1 | 13 | 7 | 13 | 2 | 13 | 11 | 15 | 1 | 7 | 9 | 1 | 13 | 6 | 3 | 13 | 0 | 1 | 13 | 6 | 13 | 1 | 8 | 5 | 3 | 1 |
| 14 | 14 | 13 | 0 | 14 | 11 | 14 | 1 | 14 | 7 | 14 | 2 | 5 | 13 | 2 | 14 | 2 | 0 | 12 | 1 | 2 | 14 | 5 | 14 | 2 | 4 | 6 | 2 | 2 |
| 15 | 15 | 12 | 3 | 15 | 15 | 15 | 0 | 15 | 3 | 13 | 15 | 4 | 12 | 12 | 15 | 3 | 1 | 15 | 3 | 3 | 11 | 0 | 12 | 3 | 0 | 3 | 1 | 3 |
| Type | dct | dst | dct | dct | dct | dst | dst | dst | dct | dct | dct | dst | dst | dst | dst | dst | dst | dst | dst | dct | dct | dct | dct | dct | dct | dct | dct | dst |

# Fig. 3A

| | | | | | | | |
|---|---|---|---|---|---|---|---|
| $I_0$ | $I_1$ | $I_2$ | $I_3$ | $I_4$ | $I_5$ | $I_6$ | $I_7$ |
| $I_8$ | $I_9$ | $I_{10}$ | $I_{11}$ | $I_{12}$ | $I_{13}$ | $I_{14}$ | $I_{15}$ |
| $I_{16}$ | $I_{17}$ | $I_{18}$ | $I_{19}$ | $I_{20}$ | $I_{21}$ | $I_{22}$ | $I_{23}$ |
| $I_{24}$ | $I_{25}$ | $I_{26}$ | $I_{27}$ | $I_{28}$ | $I_{29}$ | $I_{30}$ | $I_{31}$ |
| $I_{32}$ | $I_{33}$ | $I_{34}$ | $I_{35}$ | $I_{36}$ | $I_{37}$ | $I_{38}$ | $I_{39}$ |
| $I_{40}$ | $I_{41}$ | $I_{42}$ | $I_{43}$ | $I_{44}$ | $I_{45}$ | $I_{46}$ | $I_{47}$ |
| $I_{48}$ | $I_{49}$ | $I_{50}$ | $I_{51}$ | $I_{52}$ | $I_{53}$ | $I_{54}$ | $I_{55}$ |
| $I_{56}$ | $I_{57}$ | $I_{58}$ | $I_{59}$ | $I_{60}$ | $I_{61}$ | $I_{62}$ | $I_{63}$ |

$Br_u$

## Fig. 3B

$T_2$

| Indice Pixel | P0 | P1 | P2 | P3 | P4 | P5 | P6 | P7 | P8 | P9 | P10 | P11 | P12 | P13 | P14 | P15 | P16 | P17 | P18 | P19 | P20 | P21 | P22 | P23 | P24 | P25 | P26 | P27 | P28 |
|---|---|---|---|---|---|---|---|---|---|---|---|---|---|---|---|---|---|---|---|---|---|---|---|---|---|---|---|---|---|
| 0 | 0 | 7 | 0 | 7 | 0 | 0 | 0 | 3 | 7 | 0 | 1 | 1 | 6 | 7 | 8 | 24 | 48 | 48 | 59 | 0 | 0 | 0 | 0 | 0 | 0 | 0 | 0 | 0 | 0 |
| 1 | 1 | 0 | 1 | 0 | 1 | 9 | 1 | 4 | 0 | 57 | 2 | 2 | 7 | 6 | 9 | 25 | 49 | 49 | 58 | 1 | 1 | 1 | 1 | 1 | 1 | 1 | 1 | 3 | 9 |
| 2 | 2 | 1 | 2 | 1 | 2 | 18 | 2 | 5 | 1 | 50 | 3 | 3 | 2 | 5 | 10 | 26 | 50 | 50 | 57 | 2 | 2 | 2 | 2 | 2 | 4 | 5 | 7 | 2 | 10 |
| 3 | 3 | 2 | 3 | 2 | 3 | 27 | 3 | 6 | 2 | 43 | 4 | 4 | 3 | 3 | 11 | 27 | 51 | 51 | 56 | 3 | 3 | 3 | 3 | 3 | 5 | 6 | 3 | 1 | 11 |
| 4 | 4 | 3 | 4 | 3 | 4 | 36 | 4 | 7 | 3 | 36 | 5 | 5 | 4 | 4 | 12 | 28 | 52 | 52 | 0 | 4 | 4 | 4 | 4 | 4 | 6 | 7 | 4 | 4 | 12 |
| 5 | 5 | 4 | 5 | 4 | 5 | 45 | 5 | 63 | 4 | 29 | 6 | 6 | 5 | 13 | 13 | 29 | 53 | 53 | 1 | 5 | 5 | 5 | 5 | 5 | 7 | 2 | 5 | 5 | 13 |
| 6 | 6 | 5 | 6 | 5 | 6 | 54 | 6 | 62 | 5 | 22 | 7 | 7 | 0 | 14 | 14 | 30 | 54 | 54 | 2 | 6 | 6 | 6 | 6 | 6 | 2 | 3 | 6 | 6 | 14 |
| 7 | 7 | 6 | 7 | 6 | 7 | 63 | 7 | 61 | 6 | 15 | 0 | 0 | 1 | 15 | 15 | 31 | 55 | 55 | 3 | 7 | 7 | 7 | 7 | 7 | 3 | 4 | 2 | 7 | 15 |
| 8 | 8 | 15 | 40 | 15 | 24 | 8 | 24 | 10 | 15 | 8 | 9 | 9 | 14 | 0 | 16 | 6 | 40 | 56 | 50 | 8 | 8 | 9 | 15 | 40 | 8 | 8 | 8 | 8 | 8 |
| 9 | 9 | 8 | 41 | 8 | 25 | 17 | 25 | 11 | 8 | 1 | 10 | 10 | 15 | 1 | 17 | 9 | 41 | 57 | 49 | 9 | 9 | 10 | 8 | 41 | 9 | 9 | 9 | 11 | 17 |
| 10 | 10 | 9 | 42 | 9 | 26 | 26 | 26 | 12 | 9 | 58 | 11 | 11 | 10 | 2 | 18 | 10 | 42 | 58 | 48 | 10 | 10 | 11 | 9 | 42 | 12 | 13 | 15 | 10 | 18 |
| 11 | 11 | 10 | 43 | 10 | 27 | 35 | 27 | 13 | 10 | 51 | 12 | 12 | 11 | 11 | 19 | 11 | 43 | 59 | 8 | 11 | 11 | 12 | 10 | 43 | 13 | 14 | 11 | 9 | 19 |
| 12 | 12 | 11 | 44 | 11 | 28 | 44 | 28 | 14 | 11 | 44 | 13 | 13 | 12 | 12 | 20 | 12 | 44 | 60 | 9 | 12 | 12 | 13 | 11 | 44 | 14 | 15 | 12 | 12 | 20 |
| 13 | 13 | 12 | 45 | 12 | 29 | 53 | 29 | 15 | 12 | 37 | 14 | 14 | 13 | 21 | 21 | 13 | 45 | 61 | 10 | 13 | 13 | 14 | 12 | 45 | 15 | 10 | 13 | 13 | 21 |
| 14 | 14 | 13 | 46 | 13 | 30 | 62 | 30 | 55 | 13 | 30 | 15 | 15 | 8 | 22 | 22 | 14 | 46 | 62 | 11 | 14 | 14 | 15 | 13 | 46 | 10 | 11 | 14 | 14 | 22 |
| 15 | 15 | 14 | 47 | 14 | 31 | 7 | 31 | 54 | 14 | 23 | 16 | 16 | 9 | 23 | 23 | 15 | 47 | 63 | 12 | 15 | 15 | 8 | 14 | 47 | 11 | 12 | 10 | 15 | 23 |
| 16 | 16 | 23 | 48 | 23 | 32 | 16 | 32 | 17 | 15 | 16 | 17 | 17 | 22 | 8 | 24 | 16 | 0 | 40 | 41 | 18 | 16 | 18 | 22 | 32 | 16 | 16 | 16 | 16 | 16 |
| 17 | 17 | 16 | 49 | 16 | 33 | 25 | 33 | 18 | 16 | 9 | 18 | 18 | 23 | 9 | 25 | 17 | 1 | 41 | 40 | 19 | 17 | 19 | 23 | 33 | 17 | 17 | 17 | 19 | 25 |
| 18 | 18 | 17 | 50 | 17 | 34 | 34 | 34 | 19 | 17 | 2 | 19 | 19 | 18 | 10 | 26 | 18 | 2 | 42 | 16 | 20 | 18 | 20 | 16 | 34 | 20 | 21 | 23 | 18 | 26 |
| 19 | 19 | 18 | 51 | 18 | 35 | 43 | 35 | 20 | 18 | 59 | 20 | 20 | 19 | 19 | 27 | 19 | 3 | 43 | 17 | 21 | 19 | 21 | 17 | 35 | 21 | 22 | 19 | 17 | 27 |
| 20 | 20 | 19 | 52 | 19 | 36 | 52 | 36 | 21 | 19 | 52 | 21 | 21 | 20 | 20 | 28 | 20 | 4 | 44 | 18 | 22 | 20 | 22 | 18 | 36 | 22 | 23 | 20 | 20 | 28 |
| 21 | 21 | 20 | 53 | 20 | 37 | 61 | 37 | 22 | 20 | 45 | 22 | 22 | 21 | 29 | 29 | 21 | 5 | 45 | 19 | 23 | 21 | 23 | 19 | 37 | 23 | 18 | 21 | 21 | 29 |
| 22 | 22 | 21 | 54 | 21 | 38 | 6 | 38 | 23 | 21 | 38 | 23 | 23 | 16 | 30 | 30 | 22 | 6 | 46 | 20 | 16 | 22 | 16 | 20 | 38 | 18 | 19 | 22 | 22 | 30 |
| 23 | 23 | 22 | 55 | 22 | 39 | 15 | 39 | 24 | 22 | 31 | 24 | 24 | 17 | 31 | 31 | 23 | 7 | 47 | 21 | 17 | 23 | 17 | 21 | 39 | 19 | 20 | 18 | 23 | 31 |
| 24 | 24 | 31 | 8 | 31 | 40 | 24 | 40 | 25 | 23 | 24 | 25 | 25 | 30 | 16 | 32 | 0 | 8 | 0 | 32 | 26 | 48 | 27 | 29 | 8 | 24 | 24 | 24 | 24 | 24 |
| 25 | 25 | 24 | 9 | 24 | 41 | 33 | 41 | 26 | 24 | 17 | 26 | 26 | 31 | 17 | 33 | 1 | 9 | 1 | 24 | 27 | 49 | 28 | 30 | 9 | 25 | 25 | 25 | 27 | 33 |
| 26 | 26 | 25 | 10 | 25 | 42 | 42 | 42 | 27 | 25 | 10 | 27 | 27 | 26 | 18 | 34 | 2 | 10 | 2 | 25 | 28 | 50 | 29 | 31 | 10 | 28 | 29 | 31 | 26 | 34 |
| 27 | 27 | 26 | 11 | 26 | 43 | 51 | 43 | 28 | 26 | 3 | 28 | 28 | 27 | 27 | 35 | 3 | 11 | 3 | 26 | 29 | 51 | 30 | 24 | 11 | 29 | 30 | 27 | 25 | 35 |
| 28 | 28 | 27 | 12 | 27 | 44 | 60 | 44 | 29 | 27 | 60 | 29 | 29 | 28 | 28 | 36 | 4 | 12 | 4 | 27 | 30 | 52 | 31 | 25 | 12 | 30 | 31 | 28 | 28 | 36 |
| 29 | 29 | 28 | 13 | 28 | 45 | 5 | 45 | 30 | 28 | 53 | 30 | 30 | 29 | 37 | 37 | 5 | 13 | 5 | 28 | 31 | 53 | 24 | 26 | 13 | 31 | 26 | 29 | 29 | 37 |
| 30 | 30 | 29 | 14 | 29 | 46 | 14 | 46 | 31 | 29 | 46 | 31 | 31 | 24 | 38 | 38 | 6 | 14 | 6 | 29 | 24 | 54 | 25 | 27 | 14 | 26 | 27 | 30 | 30 | 38 |
| 31 | 31 | 30 | 15 | 30 | 47 | 23 | 47 | 39 | 30 | 39 | 24 | 24 | 25 | 39 | 39 | 7 | 15 | 7 | 30 | 25 | 55 | 26 | 28 | 15 | 27 | 28 | 26 | 31 | 39 |
| 32 | 32 | 39 | 16 | 39 | 48 | 32 | 48 | 24 | 39 | 32 | 33 | 33 | 38 | 24 | 0 | 32 | 16 | 8 | 33 | 34 | 56 | 36 | 36 | 16 | 32 | 32 | 32 | 32 | 40 |
| 33 | 33 | 32 | 17 | 32 | 49 | 41 | 49 | 32 | 32 | 25 | 34 | 34 | 39 | 25 | 1 | 33 | 17 | 9 | 34 | 35 | 57 | 37 | 37 | 17 | 33 | 33 | 33 | 33 | 41 |
| 34 | 34 | 33 | 18 | 33 | 50 | 50 | 50 | 33 | 33 | 28 | 35 | 35 | 34 | 26 | 2 | 34 | 18 | 10 | 35 | 36 | 58 | 38 | 38 | 18 | 36 | 37 | 39 | 34 | 42 |
| 35 | 35 | 34 | 19 | 34 | 51 | 59 | 51 | 34 | 34 | 11 | 36 | 36 | 35 | 35 | 3 | 35 | 19 | 11 | 36 | 37 | 59 | 39 | 39 | 19 | 37 | 38 | 35 | 35 | 43 |
| 36 | 36 | 35 | 20 | 35 | 52 | 4 | 52 | 35 | 35 | 4 | 37 | 37 | 36 | 36 | 4 | 36 | 20 | 12 | 37 | 38 | 60 | 32 | 32 | 20 | 38 | 39 | 36 | 36 | 44 |
| 37 | 37 | 36 | 21 | 36 | 53 | 13 | 53 | 36 | 36 | 61 | 38 | 38 | 37 | 45 | 5 | 37 | 21 | 13 | 38 | 39 | 61 | 33 | 33 | 21 | 39 | 34 | 37 | 37 | 45 |
| 38 | 38 | 37 | 22 | 37 | 54 | 22 | 54 | 37 | 37 | 54 | 39 | 39 | 32 | 46 | 6 | 38 | 22 | 14 | 39 | 32 | 62 | 34 | 34 | 22 | 34 | 35 | 38 | 38 | 46 |
| 39 | 39 | 38 | 23 | 38 | 55 | 31 | 55 | 38 | 38 | 47 | 32 | 32 | 33 | 47 | 7 | 39 | 23 | 15 | 31 | 33 | 63 | 35 | 35 | 23 | 35 | 36 | 34 | 39 | 47 |

:
:

⋮

T₂

| 40 | 40 | 47 | 24 | 47 | 56 | 40 | 56 | 16 | 47 | 40 | 41 | 41 | 46 | 32 | 40 | 40 | 24 | 16 | 42 | 42 | 40 | 45 | 43 | 24 | 40 | 40 | 40 | 40 | 40 |
|----|----|----|----|----|----|----|----|----|----|----|----|----|----|----|----|----|----|----|----|----|----|----|----|----|----|----|----|----|----|
| 41 | 41 | 40 | 25 | 40 | 57 | 49 | 57 | 40 | 40 | 33 | 42 | 42 | 47 | 33 | 41 | 41 | 25 | 17 | 43 | 43 | 41 | 46 | 44 | 25 | 41 | 41 | 41 | 43 | 49 |
| 42 | 42 | 41 | 26 | 41 | 58 | 58 | 58 | 41 | 41 | 25 | 43 | 43 | 42 | 34 | 42 | 42 | 26 | 18 | 44 | 44 | 42 | 47 | 45 | 26 | 44 | 45 | 47 | 42 | 50 |
| 43 | 43 | 42 | 27 | 42 | 59 | 3 | 59 | 42 | 42 | 19 | 44 | 44 | 43 | 43 | 43 | 43 | 27 | 19 | 45 | 45 | 43 | 40 | 46 | 27 | 45 | 46 | 43 | 41 | 51 |
| 44 | 44 | 43 | 28 | 43 | 60 | 12 | 60 | 43 | 43 | 12 | 45 | 45 | 44 | 44 | 44 | 44 | 28 | 20 | 46 | 46 | 44 | 41 | 47 | 28 | 46 | 47 | 44 | 44 | 52 |
| 45 | 45 | 44 | 29 | 44 | 61 | 21 | 61 | 44 | 44 | 5 | 46 | 46 | 45 | 53 | 45 | 45 | 29 | 21 | 47 | 47 | 45 | 42 | 40 | 29 | 47 | 42 | 45 | 45 | 53 |
| 46 | 46 | 45 | 30 | 45 | 62 | 30 | 62 | 45 | 45 | 62 | 47 | 47 | 40 | 54 | 46 | 46 | 30 | 22 | 23 | 40 | 46 | 43 | 41 | 30 | 42 | 43 | 46 | 46 | 54 |
| 47 | 47 | 46 | 31 | 46 | 63 | 39 | 63 | 46 | 46 | 55 | 40 | 40 | 41 | 55 | 47 | 47 | 31 | 23 | 22 | 41 | 47 | 44 | 42 | 31 | 43 | 44 | 42 | 47 | 55 |
| 48 | 48 | 55 | 32 | 55 | 16 | 48 | 16 | 8 | 55 | 48 | 49 | 49 | 54 | 40 | 48 | 48 | 32 | 24 | 51 | 50 | 24 | 54 | 50 | 48 | 48 | 48 | 48 | 48 | 48 |
| 49 | 49 | 48 | 33 | 48 | 17 | 57 | 17 | 9 | 48 | 41 | 50 | 50 | 55 | 41 | 49 | 49 | 33 | 25 | 52 | 51 | 25 | 55 | 51 | 49 | 49 | 49 | 49 | 51 | 57 |
| 50 | 50 | 49 | 34 | 49 | 18 | 2 | 18 | 48 | 49 | 34 | 51 | 51 | 50 | 42 | 50 | 50 | 34 | 26 | 53 | 52 | 26 | 48 | 52 | 50 | 52 | 53 | 55 | 50 | 58 |
| 51 | 51 | 50 | 35 | 50 | 19 | 11 | 19 | 49 | 50 | 27 | 52 | 52 | 51 | 51 | 51 | 51 | 35 | 27 | 54 | 53 | 27 | 49 | 53 | 51 | 53 | 54 | 51 | 49 | 59 |
| 52 | 52 | 51 | 36 | 51 | 20 | 20 | 20 | 50 | 51 | 20 | 53 | 53 | 52 | 52 | 52 | 52 | 36 | 28 | 55 | 54 | 28 | 50 | 54 | 52 | 54 | 55 | 52 | 52 | 60 |
| 53 | 53 | 52 | 37 | 52 | 21 | 29 | 21 | 51 | 52 | 13 | 54 | 54 | 53 | 61 | 53 | 53 | 37 | 29 | 15 | 55 | 29 | 51 | 55 | 53 | 55 | 50 | 53 | 53 | 61 |
| 54 | 54 | 53 | 38 | 53 | 22 | 38 | 22 | 52 | 53 | 6 | 55 | 55 | 48 | 62 | 54 | 54 | 38 | 30 | 14 | 48 | 30 | 52 | 48 | 54 | 50 | 51 | 54 | 54 | 62 |
| 55 | 55 | 54 | 39 | 54 | 23 | 47 | 23 | 53 | 54 | 63 | 48 | 48 | 49 | 63 | 55 | 55 | 39 | 31 | 13 | 49 | 31 | 53 | 49 | 55 | 51 | 52 | 50 | 55 | 63 |
| 56 | 56 | 63 | 56 | 55 | 8 | 56 | 8 | 2 | 63 | 56 | 56 | 57 | 62 | 48 | 56 | 56 | 56 | 32 | 60 | 58 | 32 | 63 | 57 | 56 | 56 | 56 | 56 | 56 | 56 |
| 57 | 57 | 56 | 57 | 56 | 9 | 1 | 9 | 1 | 56 | 49 | 57 | 58 | 63 | 49 | 57 | 57 | 57 | 33 | 61 | 59 | 33 | 56 | 58 | 57 | 57 | 57 | 57 | 59 | 1 |
| 58 | 58 | 57 | 58 | 57 | 10 | 10 | 10 | 0 | 57 | 42 | 58 | 59 | 58 | 50 | 58 | 58 | 58 | 34 | 62 | 60 | 34 | 57 | 59 | 58 | 60 | 61 | 63 | 58 | 2 |
| 59 | 59 | 58 | 59 | 58 | 11 | 19 | 11 | 56 | 58 | 35 | 59 | 60 | 59 | 59 | 59 | 59 | 59 | 35 | 63 | 61 | 35 | 58 | 60 | 59 | 61 | 62 | 62 | 57 | 3 |
| 60 | 60 | 59 | 60 | 59 | 12 | 28 | 12 | 57 | 59 | 28 | 60 | 61 | 60 | 60 | 60 | 60 | 60 | 36 | 7 | 62 | 36 | 59 | 61 | 60 | 62 | 63 | 63 | 60 | 4 |
| 61 | 61 | 60 | 61 | 60 | 13 | 37 | 13 | 58 | 60 | 21 | 61 | 62 | 61 | 58 | 61 | 61 | 61 | 37 | 6 | 63 | 37 | 60 | 62 | 61 | 63 | 58 | 58 | 61 | 5 |
| 62 | 62 | 61 | 62 | 61 | 14 | 46 | 14 | 59 | 61 | 14 | 62 | 63 | 56 | 57 | 62 | 62 | 62 | 38 | 5 | 56 | 38 | 61 | 63 | 62 | 58 | 59 | 59 | 62 | 6 |
| 63 | 63 | 62 | 63 | 62 | 15 | 55 | 15 | 60 | 62 | 7 | 63 | 56 | 57 | 56 | 63 | 63 | 63 | 39 | 4 | 57 | 39 | 62 | 56 | 63 | 59 | 60 | 58 | 63 | 7 |

# Fig. 3C

EP 3 075 155 B1

$OP^{-1}_1$   $OT^{-1}_1$

$OP^{-1}_2$   $OT^{-1}_2$

$OP^{-1}_m$   $OT^{-1}_n$

$OP^{-1}_{K-1}$   $OT^{-1}_{L-1}$

MEM_DO

MT_DO

MT_DO

PG_DO

$Bq_1$
$Bq_2$
$Bq_u$
$Bq_s$

MDT_DO

SMDT2_DO

$MT^{-1}$_DO

$MPER^{-1}$_DO

$PRED^{-1}$_DO

$BP_{opt}$

$OT^{-1}_{m*}$
$OP^{-1}_{n*}$

F   $\mu P$   $IC_j$   $BP_{opt}$   $BDq_u$   $BDt_u$   $OT^{-1}_{n*}$   $BDp_u$   $OP^{-1}_{m*}$   $BDr_u$   $BD_u$   $IDC_j$

UT_DO   MI_DO   PRED_DO   MDE   $MQ^{-1}$_DO   $m*,n*$   SMDT1_DO   URI

DO

**Fig. 4**

**Fig. 5**

D6

| LIRE INDICE m*,n* ASSOCIE AU COUPLE PERMUTATION-TRANSFORMATION $(OP_{m*}, OT_{n*})$ SELECTIONNE A L'ETAPE C5 | D610 |

| DETERMINER COUPLE PERMUTATION-TRANSFORMATION $(OT_{n*}^{-1}, OP_{m*}^{-1})$ INVERSE DU COUPLE $(OT_{n*}, OP_{m*})$ | D611 |

F

## Fig. 6A

D6

F

| APPLIQUER PLURALITE DE COUPLES TRANSFORMATION PUIS PERMUTATION AUX DONNEES DU BLOC $BDt_u$ | D620 |

| RECONSTRUIRE PLURALITE DE BLOCS RESPECTIVEMENT A PARTIR DE LA PLURALITE DE COUPLES TRANSFORMATION-PERMUTATION | D621 |

| SELECTIONNER BLOC RECONSTRUIT PAR MAXIMISATION D'UN CRITERE DE COHERENCE APPLIQUE A LA PLURALITE DE BLOCS RECONSTRUITS | D622 |

$OT_{n*}^{-1}, OP_{m*}^{-1}$

## Fig. 6B

**EP 3 075 155 B1**

## RÉFÉRENCES CITÉES DANS LA DESCRIPTION

### Documents brevets cités dans la description

- FR 2899744